(19) **Europäisches Patentamt / European Patent Office / Office européen des brevets**

(11) **EP 3 214 815 A1**

(12) **EUROPEAN PATENT APPLICATION**
published in accordance with Art. 153(4) EPC

(43) Date of publication:
06.09.2017 Bulletin 2017/36

(51) Int Cl.:
*H04L 27/38* (2006.01)  *H04L 27/01* (2006.01)
*H04L 27/06* (2006.01)

(21) Application number: 15856101.9

(22) Date of filing: 16.10.2015

(86) International application number:
PCT/JP2015/079329

(87) International publication number:
WO 2016/067938 (06.05.2016 Gazette 2016/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 29.10.2014 JP 2014220284

(71) Applicant: Sony Corporation
Tokyo 108-0075 (JP)

(72) Inventors:
• HIRAYAMA Yuichi
  Tokyo 108-0075 (JP)
• KISHIMOTO Naomichi
  Tokyo 108-0075 (JP)
• KAMATA Hiroyuki
  Tokyo 108-0075 (JP)

(74) Representative: MFG Patentanwälte
Meyer-Wildhagen Meggle-Freund
Gerhard PartG mbB
Amalienstraße 62
80799 München (DE)

(54) **RECEIVING DEVICE, METHOD, AND PROGRAM**

(57) The present disclosure relates to a reception device, a method, and a program, which realize a non-linear distortion compensation of a hard decision at a low cost. A hard decision unit is composed of a slicer (Slicer). The hard decision unit inputs average amplitude (1) to (n) and average phase gaps (1) to (n) of each ring from an amplitude/phase gap averaging unit, corrects at least one of amplitude and phase threshold processings, and performs a hard decision on a result of filtering with a feed-forward filter by using the corrected amplitude and phase-targeted threshold processings. The hard decision unit outputs a hard decision result $S'_k$ to an error calculation unit. The present disclosure can be applied to, for example, a reception device that receives a signal of ASPK satellite digital television broadcasting.

*FIG. 7*

EP 3 214 815 A1

**Description**

TECHNICAL FIELD

The present disclosure relates to a reception device, a method, and a program and, more particularly, relates to a reception device, a method, and a program that can compensate non-linear distortion of a hard decision at low cost.

BACKGROUND ART

As a modulation method for satellite digital television broadcasting, phase shift keying (PSK), which uses only phase information, has been used. However, in response to an expectation for 4k and 8k broadcasting, amplitude phase shift keying (APSK), which uses amplitude information as well as phase information, is getting popular.
In a receiver of digital television broadcasting, a hard decision process for determining a signal point which is closest to a reception signal has been used for various purposes. For example, the hard decision process is used to detect a phase difference in phase synchronization, detect an equalization difference of an equalizer, and input to a decision feedback equalizer (DFE).
Here, a communication path of the satellite broadcasting will be considered. In a satellite repeater, there are an IMUX filter, a travelling-wave tube amplifier (TWTA), and an OMUX filter. Among these filters, the TWTA shows non-linear characteristics. With a constellation example that an input and an output of TWTA are 8PSK and 32APSK, since a phase rotation is applied to all symbols in 8PSK in a same manner, compensation can be realized by the phase synchronization of the receiver. On the other hand, since a radial reduction ratio and a phase rotation amount differ in each ring in 32APSK, when a hard decision is performed based on a transmission point, a hard decision error may occur and its reception performance is reduced.
In view of the above problem, Patent Document 1 proposes a correction method of a hard decision as described below. In ARIB STD-B44, which is Japanese satellite broadcasting standard (see Non-Patent Document 1), all signal points are included in a known signal so that a non-linear distortion amount can be estimated in a receiver. It is a correction method for calculating Euclidean distances between points averaging those known signals and reception points and for setting an averaging point having the smallest Euclidean distance as a hard decision point.

CITATION LIST

PATENT DOCUMENT

Patent Document 1: Japanese Patent Application Laid-Open No. 2012-39259

NON-PATENT DOCUMENT

Non-Patent Document 1: http://www.arib.or.jp/english/html/overview/doc/2-STD-B44v1_0.pdf

SUMMARY OF THE INVENTION

PROBLEMS TO BE SOLVED BY THE INVENTION

However, in the above described hard decision correction method, it is needed to calculate Euclidean distances with all points and compare the distances. In general, multipliers occupy a large circuit size in a digital circuit and, when this method is applied to num APSK, 2*num number of multipliers are needed and this increases a cost of the receiver.
The present disclosure has been made in view of the above situation and non-linear distortion in a hard decision can be compensated at low cost.

SOLUTIONS TO PROBLEMS

A reception device of an aspect of the present disclosure includes a hard decision unit configured to perform a hard decision process by using amplitude-targeted threshold processing of a reception signal and phase-targeted threshold processing of the reception signal, wherein at least one threshold processing of the amplitude-targeted threshold processing and the phase-targeted threshold processing is corrected on the basis of a signal generated from the reception signal.
The signal generated from the reception signal is a reception signal of a known signal zone.
The signal generated from the reception signal is a pilot signal.

The signal generated from the reception signal is a remodulated signal, which is a signal generated by remodulating an error correction decode result with a modulation method same as a method used in transmission.

An averaging processing unit configured to average amplitude and phase gap of the reception signal for each ring which is a collection of symbols having a same distance from an origin point, among symbols mapped on an IQ plane in a transmission side, by using the signal generated from the reception signal is further included, wherein at least one threshold processing of the amplitude-targeted threshold processing and the phase-targeted threshold processing is corrected on the basis of the amplitude and phase gap of the reception signal which are averaged by the averaging processing unit.

The averaging processing unit may average amplitude and phase gap of a signal which is successful in an error correction process among signals before the error correction corresponding to the remodulated signals, for each of the ring, by using, as a signal generated from the reception signal, a remodulated signal generated by remodulating an error correction decode result with a modulation method same as a method used in transmission.

An equalizing unit configured to perform an equalization process on the reception signal is further included, wherein the equalizing unit includes the hard decision process unit.

The equalizing unit is composed of a decision feedback equalizer (DFE) .

The equalizing unit is composed of a feed-forward equalizer (FFE) .

A phase synchronization unit configured to perform a phase correction on the reception signal is further included, wherein the phase synchronization unit includes the hard decision process unit.

The hard decision is a hard decision for amplitude phase shift keying (APSK).

The hard decision is a hard decision for amplitude shift keying (ASK) .

A reception method of an aspect of the present disclosure includes: performing a hard decision process, by a reception device, by using amplitude-targeted threshold processing of a reception signal and phase-targeted threshold processing of the reception signal; and correcting at least one threshold processing of the amplitude-targeted threshold processing and the phase-targeted threshold processing on the basis of a signal generated from the reception signal.

A program of an aspect of the present disclosure includes causes a computer to function as a hard decision unit configured to perform a hard decision process by using amplitude-targeted threshold processing of a reception signal and phase-targeted threshold processing of the reception signal, wherein at least one threshold processing of the amplitude-targeted threshold processing and the phase-targeted threshold processing is corrected on the basis of a signal generated from the reception signal.

According to an aspect of the present disclosure, a hard decision process is performed by using amplitude threshold processing of a reception signal and phase threshold processing of the reception signal. Further, at least one threshold processing of the amplitude threshold processing and the phase threshold processing is corrected on the basis of a signal generated from the reception signal.

EFFECTS OF THE INVENTION

According to the present technology, non-linear distortion of a hard decision can be compensated. Further, according to the present technology, the non-linear distortion of the hard decision can be compensated at low cost.

Here, effects described in this specification are examples, effects of the present technology are not limited to the effects described in this specification, and there may be an additional effect.

BRIEF DESCRIPTION OF DRAWINGS

Fig. 1 is a block diagram illustrating a configuration of a satellite repeater model.
Fig. 2 is a diagram illustrating transmission signal points and reception signal points of transmission signals, which are modulated with 8PSK, as coordinate positions on an IQ plane.
Fig. 3 is a diagram illustrating transmission signal points and reception signal points of transmission signals, which are modulated with 32APSK, as coordinate positions on an IQ plane.
Fig. 4 is a block diagram illustrating an outline of the present technology.
Fig. 5 is a block diagram illustrating an outline of the present technology.
Fig. 6 is a block diagram illustrating a configuration of a first embodiment of a reception device according to the present technology.
Fig. 7 is a block diagram illustrating a configuration example of an equalizing unit.
Fig. 8 is a block diagram illustrating a configuration example of a phase synchronization unit.
Fig. 9 is a block diagram illustrating a configuration example of an amplitude/phase gap averaging unit.
Fig. 10 is a block diagram illustrating a configuration example of a hard decision unit.

Fig. 11 is a circuit diagram illustrating a configuration example of a multiplication unit of a phase calculation unit.

Fig. 12 is a circuit diagram illustrating a configuration example of a multiplication unit.

Fig. 13 is a diagram illustrating an example that a process by an amplitude hard decision unit is performed on a signal of 32APSK.

Fig. 14 is a diagram illustrating an example that a process by a phase hard decision unit is performed on a ring 2 of 32APSK.

Fig. 15 is a flowchart for explaining a reception process of the reception device of Fig. 6.

Fig. 16 is a flowchart explaining an equalization process.

Fig. 17 is a flowchart explaining a phase synchronization process.

Fig. 18 is a flowchart explaining a hard decision process.

Fig. 19 is a flowchart explaining an amplitude/phase gap averaging process.

Fig. 20 is a block diagram illustrating a configuration of a second embodiment of the reception device according to the present technology.

Fig. 21 is a block diagram illustrating a configuration example of an equalizing unit.

Fig. 22 is a flowchart explaining a reception process of the reception device of Fig. 20.

Fig. 23 is a flowchart explaining an equalization process.

Fig. 24 is a block diagram illustrating a configuration of a third embodiment of the reception device according to the present technology.

Fig. 25 is a flowchart explaining a reception process of the reception device of Fig. 24.

Fig. 26 is a block diagram illustrating a configuration of a fourth embodiment of the reception device according to the present technology.

Fig. 27 is a block diagram illustrating a configuration example of an amplitude/phase gap generation unit.

Fig. 28 is a block diagram illustrating a configuration example of an amplitude/phase gap averaging unit.

Fig. 29 is a flowchart explaining a reception process of the reception device of Fig. 26.

Fig. 30 is a flowchart explaining an amplitude/phase gap generation process.

Fig. 31 is a flowchart explaining an amplitude/phase gap averaging process.

Fig. 32 is a block diagram illustrating a configuration example of a computer.

MODE FOR CARRYING OUT THE INVENTION

In the following, a mode (hereinafter, referred to as "an embodiment") for carrying out the disclosure will be described. It is noted that the descriptions will be given in the following order.

0. Outline
1. First embodiment
2. Second embodiment
3. Third embodiment
4. Fourth embodiment
5. Fifth embodiment (computer)

<0. Outline>

As a modulation method for a satellite digital television broadcasting, phase shift keying (PSK), which uses only phase information, has been used. However, in response to expectation for 4k and 8k broadcasting, amplitude phase shift keying (APSK), which uses amplitude information as well as phase information, is getting popular.

In a receiver of digital television broadcasting, a hard decision process for determining a signal point closest to the reception signal has been used for various purposes. For example, the hard decision process is used to detect a phase difference in phase synchronization, detect an equalization difference of an equalizer, and input to a decision feedback equalizer (DFE).

<Configuration example of satellite repeater model>

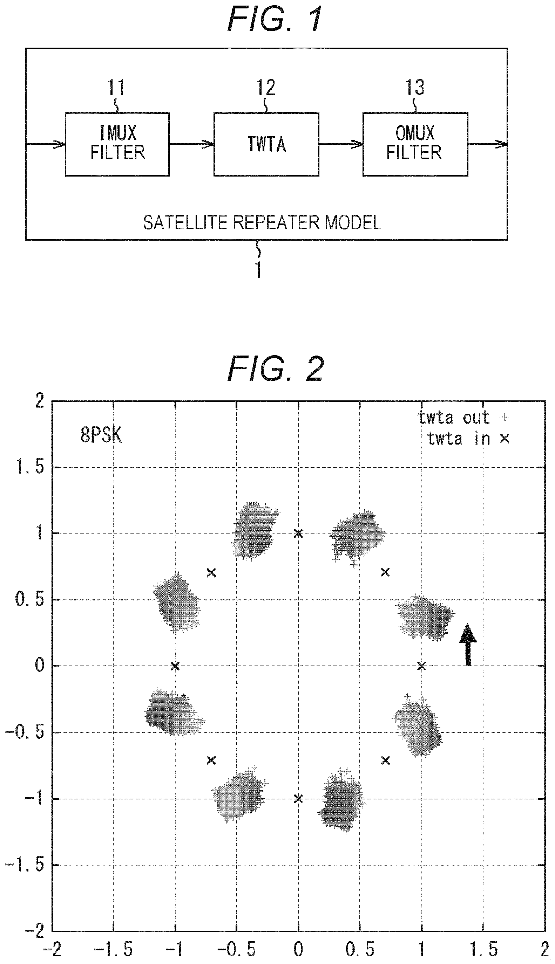

Here, a communication path of satellite broadcasting will be considered. Fig. 1 is a block diagram illustrating a configuration of a satellite repeater model. The satellite can be modeled as a satellite transmission model 1 as illustrated in Fig. 1. The satellite transmission model 1 includes an input de-multiplexer (IMUX) filter 11, a travelling wave amplifier (TWTA) 12, and an output multiplexer (OMUX) filter 13. A transfer signal from a transmitter station is processed in the IMUX filter 11, and then amplified in the TWTA 12. The output is further processed in the OMUX filter 13 and then transferred to a receiver station.

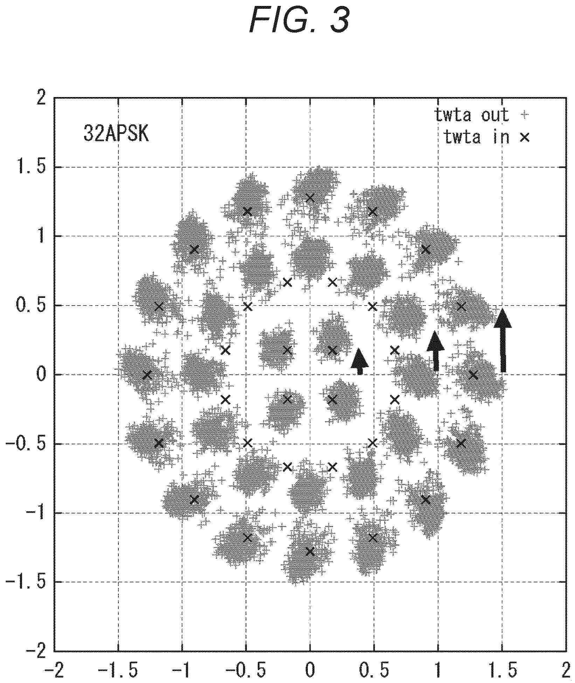

Here, the TWTA shows non-linear characteristics. A relation of input signals and output signals, which are obtained by simulating in the TWTA 12 having such characteristics, is illustrated in Figs. 2 and 3. Fig. 2 is a diagram illustrating transmission signal points and reception signal points in transmission signals, on which 8PSK modulation is processed, as coordinate positions on an IQ plane. As illustrated in Fig. 2, a coordinate of an output signal point is indicated by a signal + with respect to a coordinate of an input signal point indicated by a signal x. More specifically, the output signal points rotate in a counterclockwise direction with respect to the input signal points.

Fig. 3 is a diagram illustrating transmission signal points and reception signal points in transmission signals on which 32APSK modulation is performed, as coordinate positions on an IQ plane. As illustrated in Fig. 3, a coordinate of an output signal point is indicated by a signal + with respect to a coordinate of an input signal point indicated by a signal x. In other words, the output signal points rotate in a counterclockwise direction with respect to the input signal points. A phase rotation amount thereof differs depending on a distance from a center point, and a phase rotation amount of a signal point having a larger distance from the center point is greater than a phase rotation amount of a signal point having a smaller distance. Further, a reduction ratio of the distance from the center point differs depending on the distance from the center point.

As described above, since a phase rotation is caused simply on the entire symbols in 8PSK, the data can be compensated by phase synchronization by the receiver. On the other hand, in 32APSK, since a radial reduction ratio and a phase rotation amount differ in each ring, which is a collection of symbols having a same distance from an origin point, a hard decision error may be caused and reception performance is reduced when a hard decision is performed based on a transmission point, among the symbols mapped on the IQ plane in the transmission side.

On the other hand, Patent Document 1 proposes a following hard decision correction method. In Non-Patent Document 1, which is a Japanese satellite broadcasting standard, all signal points are included in known signals so that the receiver can estimate a non-linear distortion amount. In the correction method, Euclidean distance between a point of averaged these known signals and a reception point is calculated and an average point having the smallest Euclidean distance is used as a hard decision point.

However, in the above described hard decision correction method, it is needed to calculate Euclidean distances with all points and compare the distances. In general, multipliers occupy a large part in a digital circuit and, when the above method is applied to num APSK, 2*num of multipliers are needed and this increases cost of the receiver.

Thus, according to the present technology, a hard decision process is executed by performing threshold processing on amplitude of the reception signal and threshold processing on phase of the reception signal. In this case, at least one threshold processing of the threshold processing on the amplitude and the threshold processing on the phase is processed with a non-linear distortion correction on the basis of a signal generated from the reception signal.

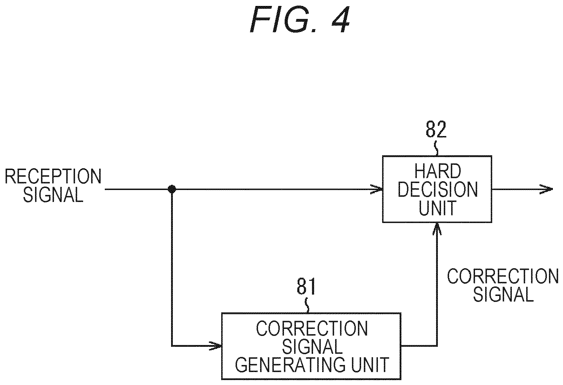

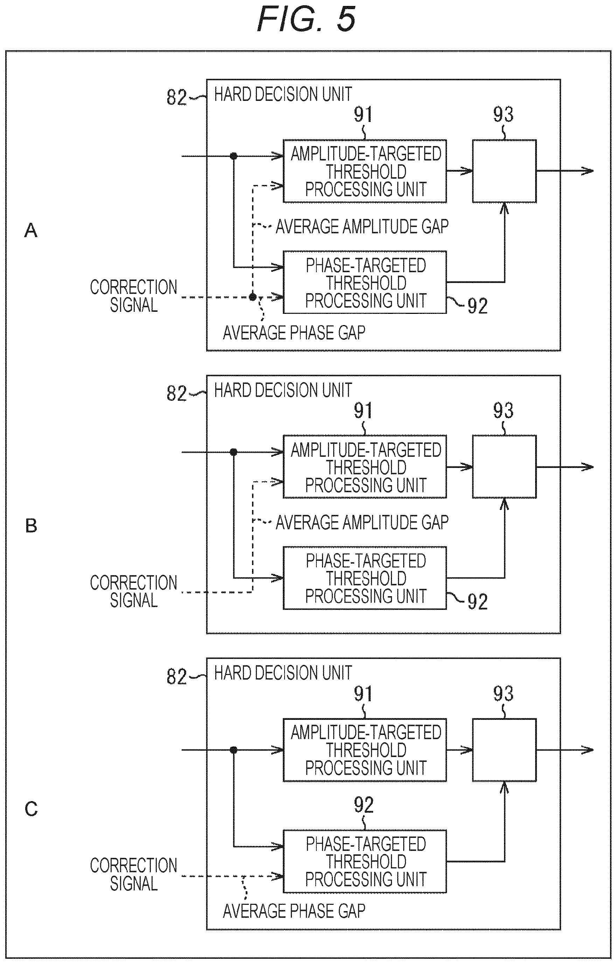

Figs. 4 and 5 are block diagrams illustrating an outline of the present technology.

In the example of Fig. 4, a reception device includes a correction signal generating unit 81 and a hard decision unit 82. In the reception device, a non-linear distortion correction is performed on at least one of the threshold processing on the amplitude and the threshold processing on the phase, on the basis of a signal generated from the reception signal. The reception signal is input to the correction signal generating unit 81 and the hard decision unit 82.

The correction signal generating unit 81 generates an average amplitude phase gap, which is a correction signal for performing a non-linear distortion correction on the threshold processing, by using a signal generated from an input reception signal. Here, as a signal generated from the reception signal, for example, there is a signal generated by remodulating its known area or its error decoding result. The correction signal generating unit 81 outputs the average amplitude phase gap, which is a correction signal generated by using the signal generated from the reception signal, to the hard decision unit 82.

The hard decision unit 82 corrects a hard decision processing by using the correction signal and performs a corrected hard decision process. In actual, the hard decision unit 82 performs a hard decision process by using the amplitude threshold processing of the reception signal and the phase threshold processing of the reception signal. In this case, the hard decision unit 82 corrects at least one of the amplitude threshold processing of the reception signal and the phase threshold processing of the reception signal by using the correction signal.

More specifically, in the example of Fig. 5, the hard decision unit 82 includes an amplitude-targeted threshold processing unit 91, a phase-targeted threshold processing unit 92, and a hard decision result outputting unit 93. A reception signal is input to the amplitude-targeted threshold processing unit 91 and the phase-targeted threshold processing unit 92 from a previous stage.

Further, as illustrated in A of Fig. 5, as the correction signals of the threshold processing, an average amplitude gap is input to the amplitude-targeted threshold processing unit 91 and an average phase gap is input to the phase-targeted threshold processing unit 92. The amplitude-targeted threshold processing unit 91 and phase-targeted threshold processing unit 92 respectively correct the amplitude threshold processing and the phase threshold processing of the reception signal on the basis of the average amplitude gap and average phase gap, perform the corrected threshold processings, and output the threshold processing results to the hard decision result outputting unit 93. Based on the both threshold processing results, the hard decision result outputting unit 93 outputs a hard decision result to a later stage.

As illustrated in B of Fig. 5, as a correction signal of the threshold processing, an average amplitude gap is input to the amplitude-targeted threshold processing unit 91. The amplitude-targeted threshold processing unit 91 corrects the amplitude threshold processing of the reception signal on the basis of the average amplitude gap, performs the corrected threshold processing, and outputs the threshold processing result to the hard decision result outputting unit 93. The phase-targeted threshold processing unit 92 performs the phase threshold processing of the reception signal and outputs the threshold processing result to the hard decision result outputting unit 93. Based on the both threshold processing results, the hard decision result outputting unit 93 outputs a hard decision result to a later stage.

As illustrated in C of Fig. 5, as a correction signal of the threshold processing, an average phase gap is input to the phase-targeted threshold processing unit 92. The phase-targeted threshold processing unit 92 corrects the phase threshold processing of the reception signal on the basis of the average phase gap, performs corrected threshold processing, and outputs a threshold processing result to the hard decision result outputting unit 93. The amplitude-targeted threshold processing unit 91 performs amplitude threshold processing of the reception signal and outputs a threshold processing result to the hard decision result outputting unit 93. Based on the both threshold processing results, the hard decision result outputting unit 93 outputs a hard decision result to a later stage.

As described above, according to the present technology, on the basis of a signal generated from the reception signal (in detail, an average amplitude phase gap generated by using a signal generated from the reception signal), a non-linear distortion correction is performed on at least one of the amplitude threshold processing and phase threshold processing of the reception signal. Then, a hard decision is performed by using the amplitude threshold processing and the phase threshold processing where at least one of the threshold processings has been corrected.

Here, in the following, details of the present technology will be described with reference to the case of A in Fig. 5 as an example (in which a non-linear distortion correction is performed on both of the amplitude threshold processing and phase threshold processing of the reception signal) ; however, it is noted that the non-linear distortion correction may be per formed on the amplitude threshold processing and phase threshold processing of the reception signal, may be performed only on the amplitude threshold processing of the reception signal, or may be performed only on the phase threshold processing.

<1. First embodiment>

<Configuration example of reception device according to the present technology>

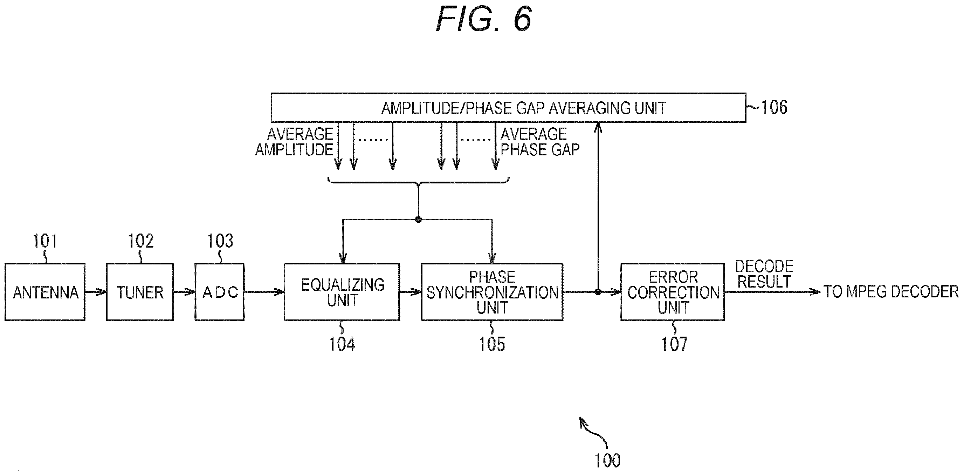

Fig. 6 is a block diagram illustrating a configuration example of a reception device to which the present technology is applied.

In the example of Fig. 6, a reception device 100 receives a signal of ASPK satellite digital television broadcasting. Here, the number of rings, which are collections of symbols having the same distance from the origin point among the symbols mapped on the IQ plane in the transmission side, is n. In the digital television broadcasting, generally, information such as a modulation method and an encoding rate is added and transmitted. A reception device 100 can recognize the total number of rings by referring to the information. For example, in ARIB STD-B44, the information is stored in a part called TMCC.

The reception device 100 includes an antenna 101, a tuner 102, an analog to digital convertor (ADC) 103, an equalizing unit 104, a phase synchronization unit 105, an amplitude/phase gap averaging unit 106, and an error correction unit 107.

The antenna 101 receives a broadcast signal and outputs the received broadcast signal to the ADC 103 via the tuner 102. The ADC 103 converts the analog broadcast signal from the tuner 102 into digital data and outputs the converted digital data to the equalizing unit 104.

The equalizing unit 104 includes, for example, a feed-forward equalizer (FFE), which only has a feed-forward filter and a unit corresponding to a hard decision unit 82 of Fig. 4. The equalizing unit 104 performs an equalization process on data from the ADC 103 and outputs the equalized data to the phase synchronization unit 105. Here, when performing an equalization process, the equalizing unit 104 inputs an average amplitude and an average phase gap of each ring from the amplitude/phase gap averaging unit 106, corrects amplitude and phase threshold processings, and performs a hard decision by using the corrected amplitude and phase threshold processings. Here, as described the above with reference to Fig. 5, the correction may be performed on both of the amplitude and phase, or on one of the amplitude and phase.

The phase synchronization unit 105 includes a unit corresponding to the hard decision unit 82 of Fig. 4. The phase synchronization unit 105 performs a phase correction on data from the equalizing unit 104, outputs the phase-corrected data to the amplitude/phase gap averaging unit 106 and error correction unit 107. Here, when performing the phase correction, the phase synchronization unit 105 inputs an average amplitude and an average phase gap of each ring from the amplitude/phase gap averaging unit 106, corrects the amplitude and phase threshold processings, and performs a hard decision by using the corrected amplitude and phase threshold processings.

The amplitude/phase gap averaging unit 106 is a unit corresponding to the correction signal generating unit 81 of Fig. 4. The amplitude/phase gap averaging unit 106 is an embodiment of Japanese Patent Application Laid-Open No. 2012-65008 (hereinafter, referred to as Patent Document 1) and the amplitude and phase gaps, which are reception signal distortion information, are averaged for each ring, not for all signal points. This can reduce the circuit size. The amplitude/phase gap averaging unit 106 outputs the average amplitude and average phase gap of each ring to the equalizing unit 104 and phase synchronization unit 105.

The error correction unit 107 performs a predetermined error correction (forward error correction (FEC)) defined by a broadcasting standard and transfers the error-corrected data to an unillustrated MPEG decoder in a later stage, as a decode result.

<Configuration example of equalizing unit>

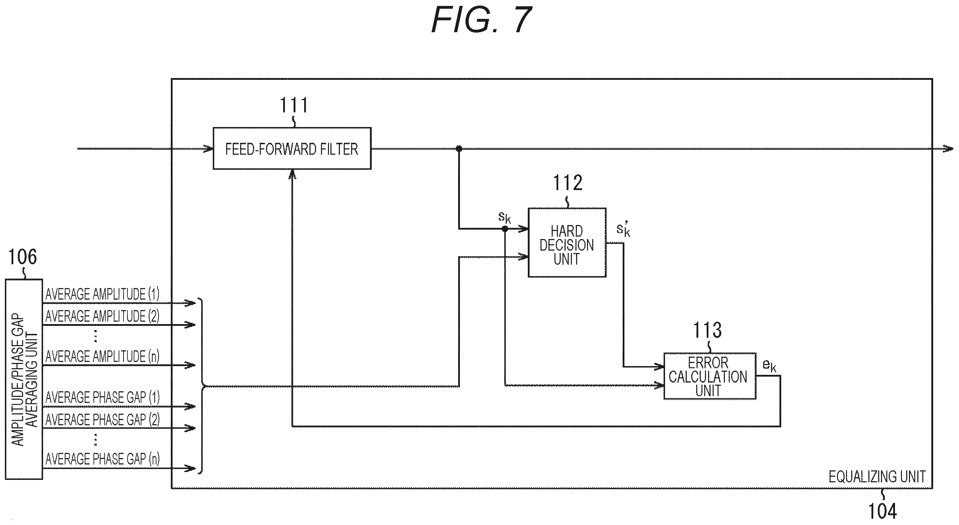

Fig. 7 is a block diagram illustrating a configuration example of an equalizing unit.

In the example of Fig. 7, the equalizing unit 104 includes a feed-forward filter 111, a hard decision unit 112, and an error calculation unit 113.

The feed-forward filter 111 is a variable coefficient filter. The feed-forward filter 111 filters input data with a feed-forward filter. In other words, the feed-forward filter 111 performs convolution calculation on the input data with a filter coefficient and outputs the signal obtained as a result of the convolution calculation to the phase synchronization unit 105 and hard decision unit 112, as an output from the equalizing unit 104. The feed-forward filter 111 updates a filter coefficient by using an equalization difference from the error calculation unit 113. As a coefficient update algorism, for example, a least mean squuare (LMS) algorism is used. Here, other algorisms may be used.

The hard decision unit 112 is a unit corresponding to the hard decision unit 82 of Fig. 4 and is composed of a slicer (Slicer) . The hard decision unit 112 performs a hard decision in which non-linear distortion is corrected based on the reception signal. In other words, the hard decision unit 112 performs a hard decision on a filtered (convolution calculation) result by the feed-forward filter 111, by using the amplitude and phase threshold processings. Here, the average amplitude (1) to (n) and the average phase gaps (1) to (n) of each ring from the amplitude/phase gap averaging unit 106 are input, the amplitude and phase threshold processings are corrected, and a hard decision process by using the corrected amplitude and phase threshold processings is performed. The hard decision unit 112 outputs a hard decision result $S'_k$ to the error calculation unit 113.

The error calculation unit 113 obtains an equalization difference $e_k$ from an input $S_k$ input to the hard decision unit 112 and hard decision result $S'_k$, which is an output of the hard decision unit 112, in a manner of $e_k = S'_k - S_k$ for example, and provides the equalization difference $e_k$ to the feed-forward filter 111.

<Configuration of phase synchronization unit>

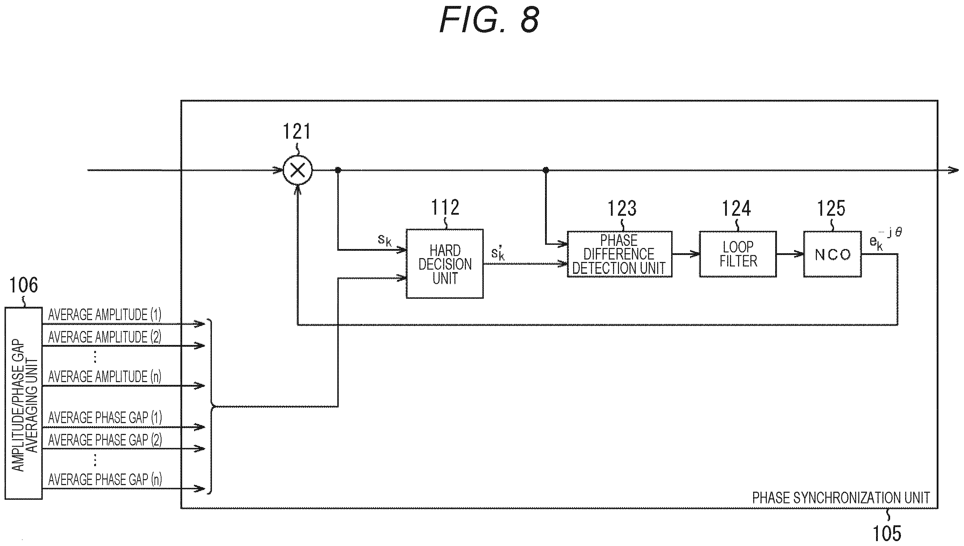

Fig. 8 is a block diagram illustrating a configuration example of a phase synchronization unit.

In the example of Fig. 8, the phase synchronization unit 105 includes a phase rotator 121, the hard decision unit 112 of Fig. 7, a phase difference detection unit 123, a loop filter 124, and an oscillator (NCO) 125.

The phase rotator 121 performs a phase correction on the input data by applying a phase rotation by an amount of $e_k^{-j\theta}$ from the oscillator 125, outputs the phase-corrected data $S_k$ as an output from the phase synchronization unit 105, and outputs the data to the hard decision unit 112 and phase difference detection unit 123.

As illustrated in Fig. 7, the hard decision unit 112 performs a hard decision in which the non-linear distortion is correctedbased on the reception signal. In other words, the hard decision unit 112 performs a hard decision on a filtered (convolution calculation) result by the feed-forward filter 111 by using the amplitude and phase threshold processings. In this case, the average amplitude (1) to (n) and average phase gaps (1) to (n) of each ring from the amplitude/phase gap averaging unit 106 are input, the amplitude and phase threshold processings are corrected, and a hard decision process by using the corrected amplitude and phase threshold processings is performed. The hard decision unit 112 outputs a hard decision result $S'_k$ to the phase difference detection unit 123.

The phase difference detection unit 123 obtains a phase difference from the phase-corrected data $S_k$ and hard decision result $S'_k$, in a manner of arg (S'k) -arg ($S_k$) for example. The phase difference detection unit 123 outputs the obtained phase difference to the loop filter 124.

The loop filter 124 filters the phase difference with a loop filter and outputs the filtered data to the oscillator 125. The oscillator 125 is composed of a numerically controlled oscillator for example. The oscillator 125 oscillates on the basis of the filtered data and outputs $e_k^{-j\theta}$ to the phase rotator 121.

<Configuration example of amplitude/phase gap averaging unit>

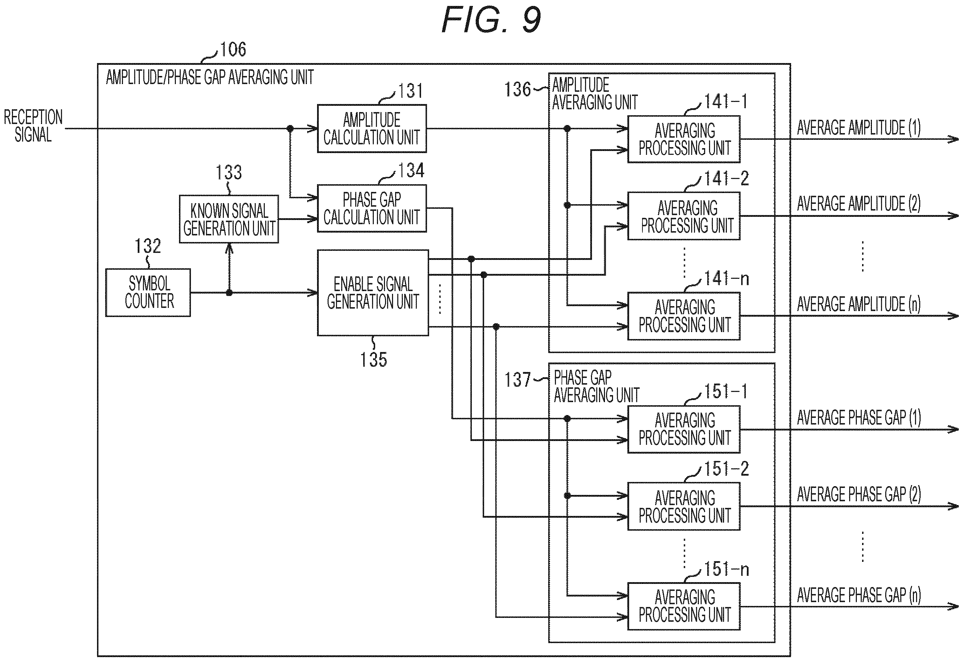

Fig. 9 is a block diagram illustrating a configuration example of the amplitude/phase gap averaging unit.

In the example of Fig. 9, the amplitude/phase gap averaging unit 106 includes an amplitude calculation unit 131, a symbol counter 132, a known signal generation unit 133, a phase gap calculation unit 134, an enable signal generation unit 135, an amplitude averaging unit 136, and a phase gap averaging unit 137.

Reception signals I and Q from the phase synchronization unit 105 are input to the amplitude calculation unit 131 and phase gap calculation unit 134.

The amplitude calculation unit 131 performs an amplitude calculation of the reception signals I and Q and outputs the amplitude calculation result to the amplitude averaging unit 136.

The symbol counter 132 performs counting and outputs a counter value to the known signal generation unit 133 and enable signal generation unit 135. The known signal generation unit 133 performs reproduction of a pilot signal as a known signal based on the counter value from the symbol counter 132 and generates a pilot signal. The known signal generation unit 133 outputs the generated pilot signal to the phase gap calculation unit 134.

The phase gap calculation unit 134 compares the reception signals I and Q from the phase synchronization unit 105 with the pilot signal from the known signal generation unit 133, calculates a phase gap, and outputs the calculated phase gap to the phase gap averaging unit 137. The enable signal generation unit 135 generates an enable signal, which is a known signal and is asserted only in a case of a corresponding ring, based on the counter value from the symbol counter 132. The enable signal generation unit 135 outputs the generated enable signal to an averaging process ring corresponding to the amplitude averaging unit 136 and an averaging process ring corresponding to the phase gap averaging unit 137.

The amplitude averaging unit 136 obtains average amplitude of each ring by using an amplitude calculation result from the amplitude calculation unit 131, according to the enable signal from the enable signal generation unit 135, and outputs the obtained average amplitude to the equalizing unit 104 and phase synchronization unit 105.

More specifically, the amplitude averaging unit 136 includes averaging processing units 141-1 to 141-n, which perform an averaging process of amplitude of first to n-th rings. Upon receiving the enable signal, the averaging processing units 141-1 to 141-n obtain an average amplitude of corresponding ring of the first to n-th rings by using the amplitude calculation result from the amplitude calculation unit 131, and output the obtained average amplitude to the equalizing unit 104 and phase synchronization unit 105.

Corresponding to the enable signal from the enable signal generation unit 135, the phase gap averaging unit 137 obtains an average phase gap of each ring by using the phase gap from the phase gap calculation unit 134 and outputs the obtained average phase gap to the equalizing unit 104 and phase synchronization unit 105.

More specifically, the phase gap averaging unit 137 includes averaging processing units 151-1 to 151-n which perform an averaging process of phase gaps of the first to n-th rings. Upon receiving the enable signal, the averaging processing units 151-1 to 151-n obtain an average phase gap of corresponding ring of the first to n-th rings by using the phase gap from the phase gap calculation unit 134 and output the obtained average phase gap to the equalizing unit 104 and phase synchronization unit 105.

<Configuration example of hard decision unit>

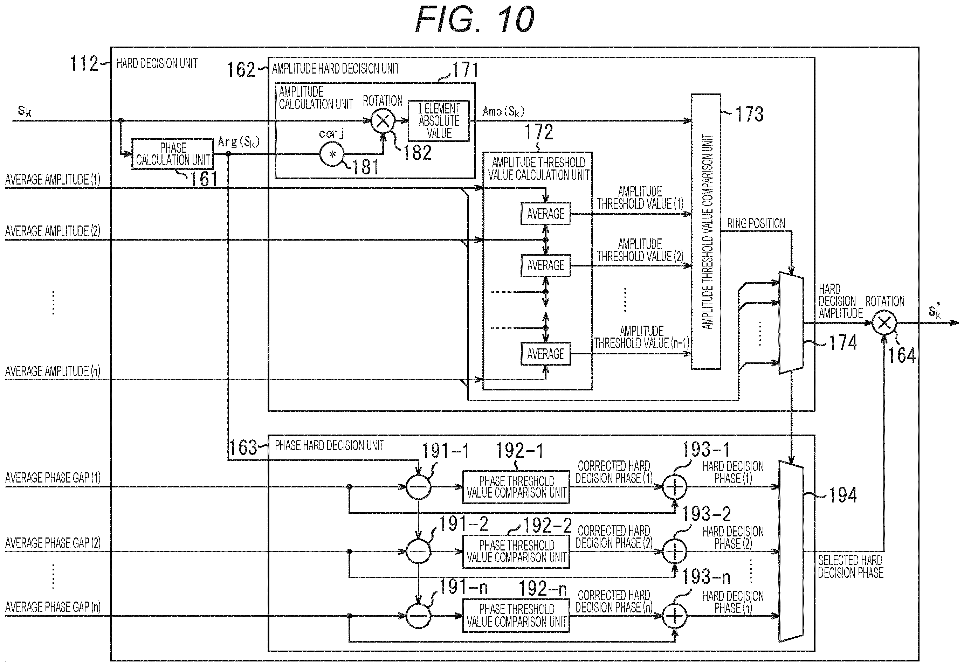

Fig. 10 is a block diagram illustrating a configuration example of the hard decision unit. Here, in the example of Fig. 10, k is from 1 to n.

In the example of Fig. 10, the hard decision unit 112 includes a phase calculation unit 161, an amplitude hard decision unit 162, a phase hard decision unit 163, and a rotation unit 164.

The input signal $S_k$ is input to the phase calculation unit 161 and amplitude hard decision unit 162. The phase calculation unit 161 calculates phase Arg ($S_k$) of the input signal $S_k$ and supplies the calculated phase Arg ($S_k$) to the amplitude hard decision unit 162 and phase hard decision unit 163.

The amplitude hard decision unit 162 includes a unit corresponding to the amplitude-targeted threshold processing unit 91 of Fig. 5. In actual, the amplitude hard decision unit 162 includes an amplitude calculation unit 171, an amplitude thresholdvalue calculation unit 172, an amplitude threshold value comparison unit 173, and a selector 174.

The amplitude calculation unit 171 includes a computation unit 181 and a multiplication unit 182, calculates amplitude Amp ($S_k$) after reversing the input signal $S_k$ by an amount of Arg($S_k$) and taking the absolute value of I element, and outputs the calculated amplitude Amp ($S_k$) to the amplitude threshold value comparison unit 173.

Here, following mathematical formula (1) indicates how to obtain S' where symbol S = I + j·Q is rotated by an angle θ.

[Mathematical Formula 1]

$$S'$$
$$= S \cdot e^{j\theta}$$
$$= (I + j \cdot Q) \cdot (\cos\theta + j \cdot \sin\theta)$$
$$= (I \cdot \cos\theta - Q \cdot \sin\theta) + j \cdot (I \cdot \sin\theta + Q \cdot \cos\theta) \ldots (1)$$

Based on the right-hand side of mathematical formula (1), it is found that four multipliers are needed.

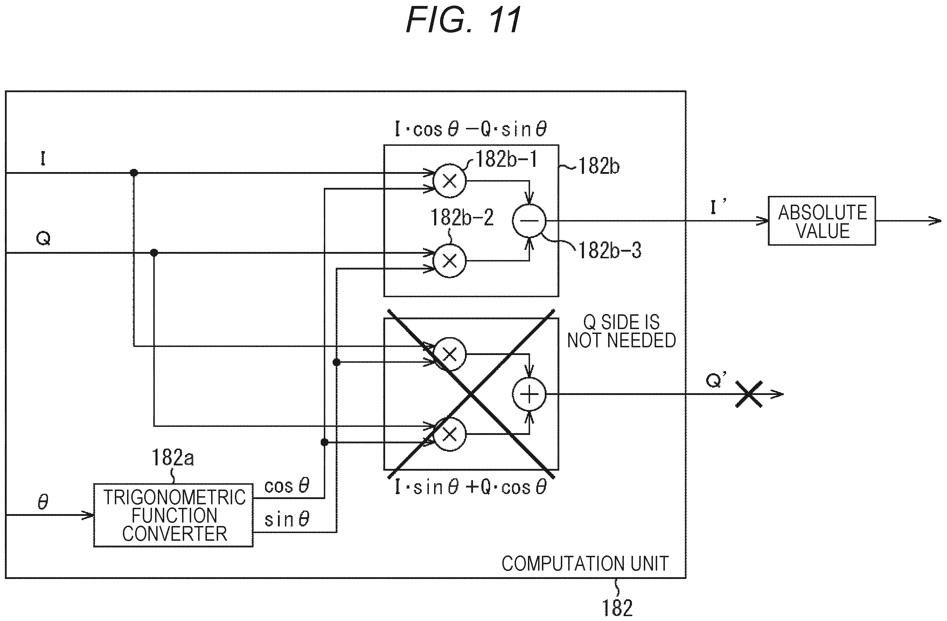

Further, the multiplication unit 182 is composed as a circuit as illustrated in Fig. 11.

Here, as represented with reference x, Q element after reversing is not needed in the multiplication unit 182. Thus, the multiplication unit 182 of the example of Fig. 11 is composed, as a circuit, of a trigonometric function converter 182a and a computing element 182b. Then, the computing element 182b includes a multiplier 182b-1. a multiplier 182b-2, and a subtractor 182b-3. In other words, the number of multipliers needed in the amplitude calculation becomes two.

To the amplitude threshold value calculation unit 172 and selector 174, average amplitude 1 to n are input. The amplitude threshold value calculation unit 172 obtains an amplitude threshold value by calculating following mathematical formula (2) by using the input average amplitude 1 to n.

[Mathematical Formula 2]

$$\text{amplitude threshold value } (k) = \alpha \times \text{average amplitude } (k) + (1-\alpha) \times \text{average amplitude } (k+1)$$

$$\text{Here, } k = 1, 2, \ldots, n-1 \text{ and } 0 \leq \alpha \leq 1 \quad \ldots (2)$$

As an example, when $\alpha = 1/2$, a center of average positions of each ring is used as a threshold value point.

The amplitude threshold value calculation unit 172 outputs the obtained amplitude threshold values (1) to (n-1) to the amplitude threshold value comparison unit 173.

The amplitude threshold value comparison unit 173 compares the amplitude $Amp(S_k)$ and amplitude threshold value (k) as expressed by the followingmathematicalformula (3) for example, and determines a ring positions of the signal $S_k$. The amplitude threshold value comparison unit 173 outputs information of the determined ring position to the selector 174.

[Mathematical Formula 3]

```
if(Amp(Sk) ≤ amplitude threshold value (1)){
ring position = 1
}else if(Amp(Sk) ≤ amplitude threshold value (2)){
ring position = 2
}else if(Amp(Sk) ≤ amplitude threshold value (3)){
:
:
}else if(Amp(Sk) ≤ amplitude threshold value (n-1)){
ring position =n-1
}else{
ring position = n
}                    ...(3)
```

Based on the input average amplitude 1 to n, the selector 174 outputs average amplitude of the ring position determined by the amplitude threshold value comparison unit 173, as hard decision amplitude, to the rotation unit 164. Further, the selector 174 supplies the information of the ring position determined by the amplitude threshold value comparison unit 173 to a selector 194 of the phase hard decision unit 163.

The phase hard decision unit 163 includes a unit corresponding to the phase-targeted phase processing unit 92 of Fig. 5. In actual, the phase hard decision unit 163 includes subtractors 191-1 to 191-n, phase threshold value comparison units 192-1 to 192-n, adders 193-1 to 193-n, and the selector 194.

Average phase gaps (1) to (n) are input to the subtractors 191-1 to 191-n and adders 193-1 to 193-n. The subtractors 191-1 to 191-n subtract (reverse) amounts of average phase gaps (1) to (n) from the phase Arg ($S_k$) and output the subtraction (reverse) results to the phase threshold value comparison units 192-1 to 192-n.

With this configuration, the subtractors 191-1 to 191-n can perform correction on the phase Arg ($S_k$) from the phase calculation unit 161 with an amount of the average phase gap of each ring. At the corrected point, the phase threshold value comparison units 192-1 to 192-n perform a hard decision by using a threshold value (for example, an average value of phase of each point) with respect to the ideal signal point, and output the corrected hard decision phase (k), which is a hard decision phase with respect to the ideal signal, to the adders 193-1 to 193-n.

The adders 193-1 to 193-n output the corrected hard decision phase (k) to which a phase gap of an amount of the average phase gap (k) is reapplied (the rotation is reversed by an amount to the phase gap), as a hard decision phase (k), to the selector 194.

The selector 194 outputs the hard decision phase (k) of the ringposition from the selector 174 to the rotation unit 164, as a selected hard decision phase.

The rotation unit 164 outputs a result of rotating the hard decision amplitude from the selector 174 by an amount of the selected hard decision phase from the selector 194 to a later stage, as a hard decision result S'k.

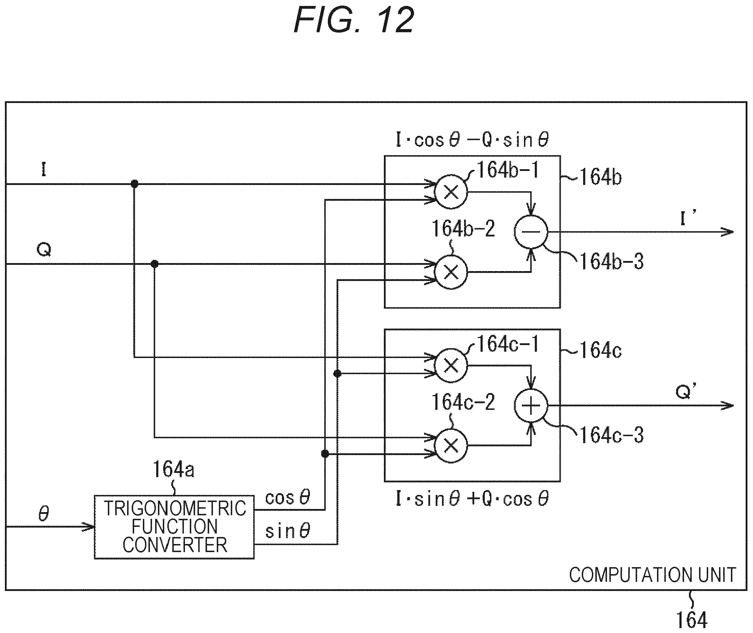

Here, similarly to the multiplication unit 182, the rotation unit 164 is composed as illustrated in Fig. 12 as a circuit. In Fig. 12, the rotation unit 164 is composed of a trigonometric function converter 164a, a computing element 164b, and a computing element 164c. Then, the computing element 164b is composed of a multiplier 164b-1, a multiplier 164b-2, and a subtractor 164b-3. Further, the computing element 164c is composed of a multiplier 164c-1, a multiplier 164c-2, and a subtractor 164c-3. In other words, a number of multipliers needed for the phase rotation is four.

Here, the example of Fig. 10 includes both of the hard decision function using the amplitude-targeted threshold processing (the upper part of the drawing) and the corrected hard decision function using the phase-targeted threshold processing (the lower part of the drawing); however, only one of the functions may be included without including both of the functions.

The hard decision unit 112 configured as described above may be composed of six multipliers in total (two multipliers in the multiplication unit 182 for amplitude calculation, and four multipliers in the rotation unit 164 for phase rotation) and regardless of the number of constellation points.

On the other hand, in the above described correction method that calculates Euclidean distance between a point averaging known signals and a reception point and uses an average point having the smallest Euclidean distance as a hard decision point, 2×num of multipliers are needed (for example, 32 multipliers in a case of 16APSK, 64 multipliers in a case of 32APSK, and 128 multipliers in a case of 64APSK). As described above, according to the present technology, since the number of multipliers is significantly small, the circuit size as the entire reception device can be reduced.

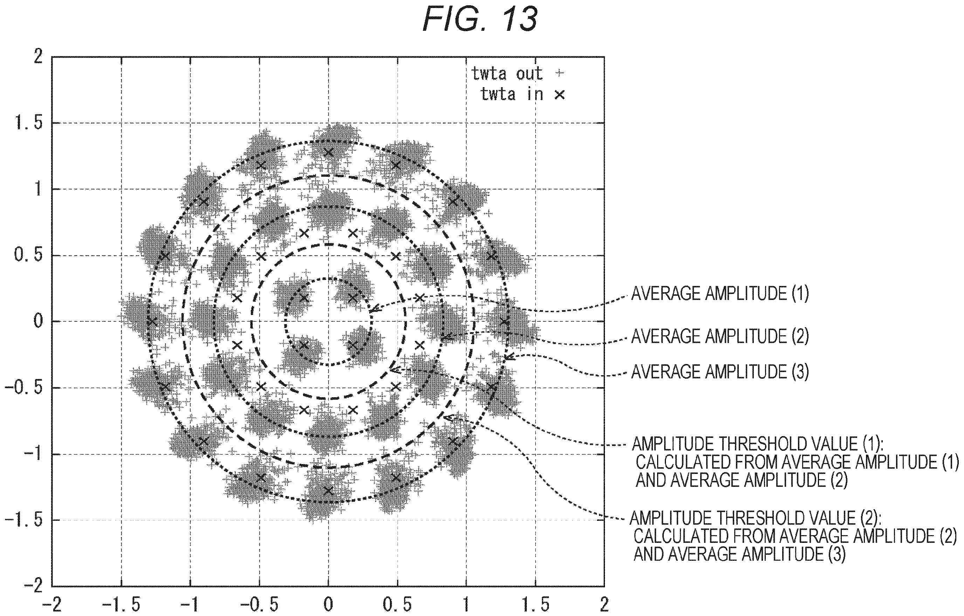

Fig. 13 is a diagram illustrating an example that a process by the amplitude hard decision unit 162 is performed on a signal of 32APSK (the IQ plane of Fig. 2).

The smallest circle (ring) represents the average amplitude (1). The third smallest circle represents the average amplitude (2). The fifth smallest circle represents the average amplitude (3). The second smallest circle represents the amplitude threshold value (1) which is calculated from the average amplitude (1) and average amplitude (2). The fourth smallest circle represents the amplitude threshold value (2) which is calculated by from the average amplitude (2) and average amplitude (3).

For example, when amplitude of a reception signal is between the average amplitude (1) and average amplitude (2) and inside the amplitude threshold value (1), the ring of the average amplitude (1) is used. Further, for example, when amplitude of a reception signal is between the average amplitude (1) and average amplitude (2) and outside the amplitude threshold value (1), the ring of the average amplitude (2) is used.

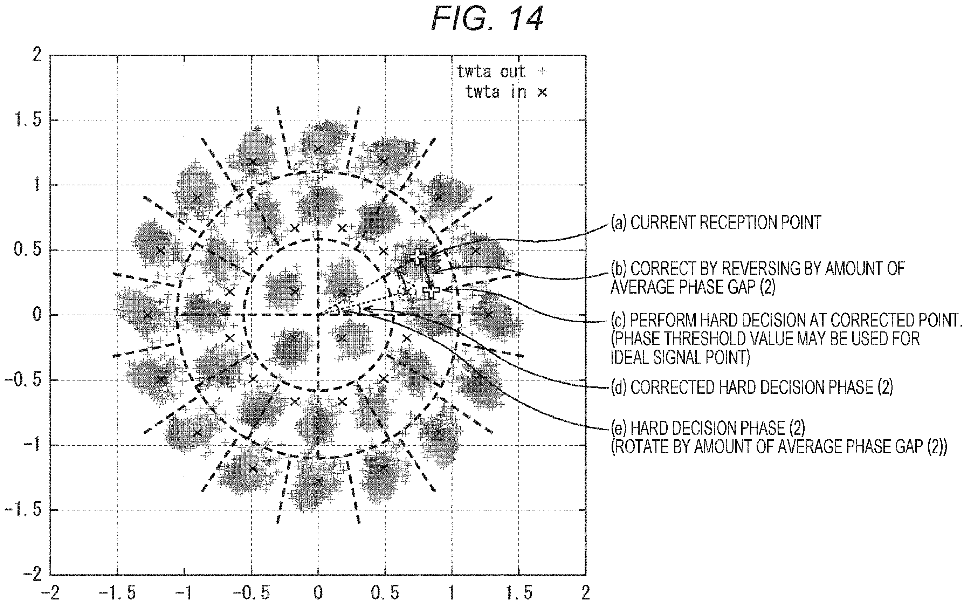

Fig. 14 is a diagram illustrating an example in which a process by the phase hard decision unit 163 is performed on the ring 2 of 32APSK (the IQ plane of Fig. 3).

The phase hard decision unit 163 performs correction on the current reception point (a) by reversing with an amount of the average phase gap (2) as illustrated by (b) and performs a hard decision at the corrected point illustrated by (c). Here, the phase threshold value may be used for the ideal signal point.

As a result, a corrected hard decision phase (2) represented by (d) is output, rotation is performed by the amount of the average phase gap (2), and a hard decision phase (2) as represented by (e) is obtained.

Here, the example of Fig. 14 illustrates both of amplitude information and phase information; however, in actual, in the phase hard decision unit 163, only the phase information is used without using the amplitude information.

<Example of process by reception device>

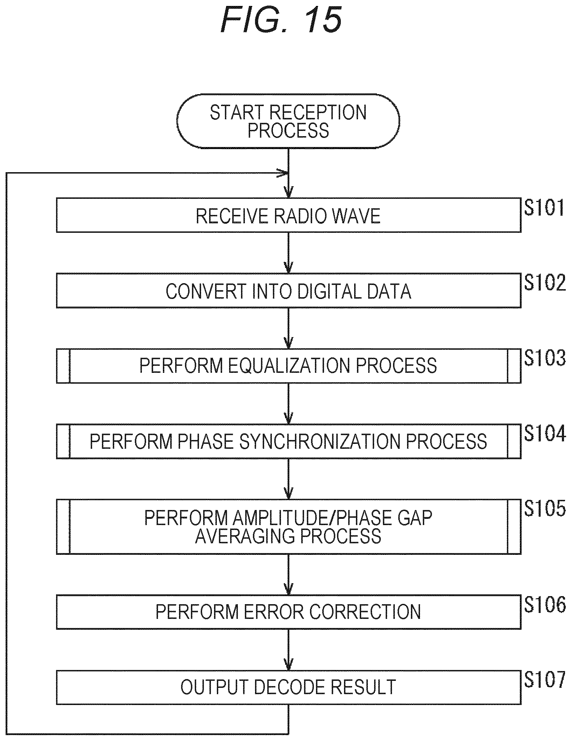

Next, with reference to a flowchart of Fig. 15, a reception process by the reception device 100 will be described.

In step S101, the antenna 101 receives a radio wave (a broadcast signal) and outputs the received broadcast signal to the ADC 103 via the tuner 102.

In step S102, the ADC 103 converts the analog broadcast signal from the tuner 102 into digital data and outputs the converted digital data to the equalizing unit 104.

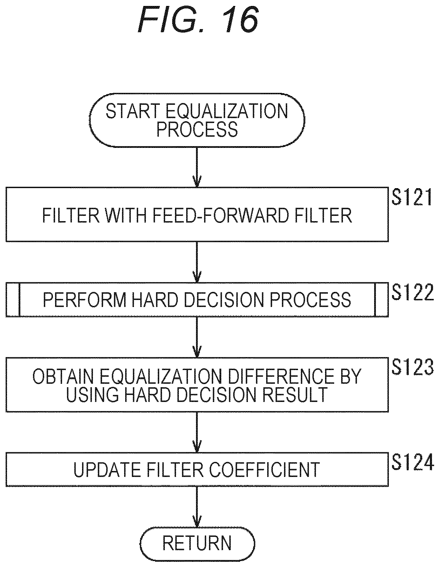

In step S103, the equalizing unit 104 performs an equalization process on the data from the ADC 103 and outputs the data, on which the equalization process is performed, to the phase synchronization unit 105. Here, when performing the equalization process, the equalizing unit 104 inputs average amplitude and average phase gap of each ring from the amplitude/phase gap averaging unit 106, corrects the amplitude and phase threshold processings, and performs a hard decision by using the corrected amplitude and phase threshold processings. The details of the equalization process will be described later with reference to Fig. 16.

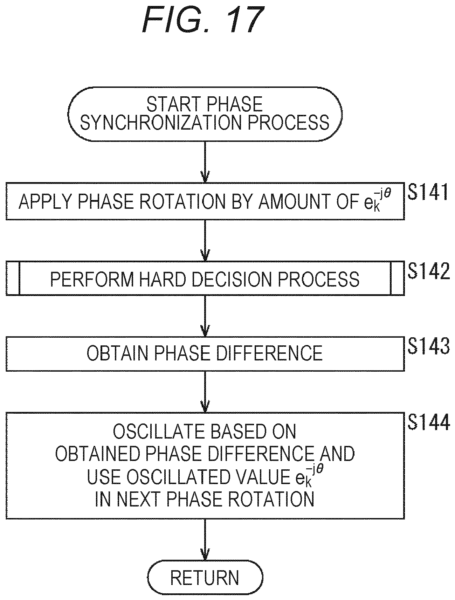

In step S104, the phase synchronization unit 105 performs a phase correction on the data from the equalizing unit 104 and outputs the phase-corrected data to the amplitude/phase gap averaging unit 106 and error correction unit 107. Here, when performing the phase correction, the phase synchronization unit 105 inputs average amplitude and an average phase gap of each ring from the amplitude/phase gap averaging unit 106, corrects the amplitude and phase threshold processings, and performs a hard decision by using the corrected amplitude and phase threshold processings; the details of the phase synchronization process will be described later with reference to Fig. 17.

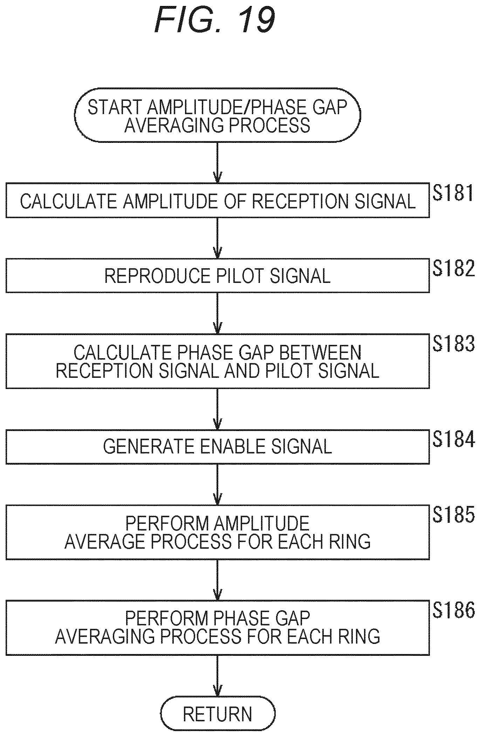

In step S105, the amplitude/phase gap averaging unit 106 averages the amplitude and phase gap of the reception signal of each ring. The amplitude/phase gap averaging unit 106 outputs the average amplitude and average phase gap of each ring to the equalizing unit 104 and phase synchronization unit 105. The detail of the averaging process of the amplitude and phase gap will be described later with reference to Fig. 19.

The error correction unit 107 performs a predetermined error correction defined by a broadcasting standard in step S106, and outputs the error-corrected data, as a decode result, to an unillustrated MPEG decoder in a later stage in step S107.

After step S107, the process returns to step S101 and subsequent processes will be repeated.

Next, with reference to the flowchart of Fig. 16, an equalization process of step S103 in Fig. 15 will be described.

In step S121, the feed-forward filter 111 filters the data from the ADC 103 with the feed-forward filter and outputs the data, as an output from the equalizing unit 104, to the phase synchronization unit 105 as well as to the hard decision unit 112.

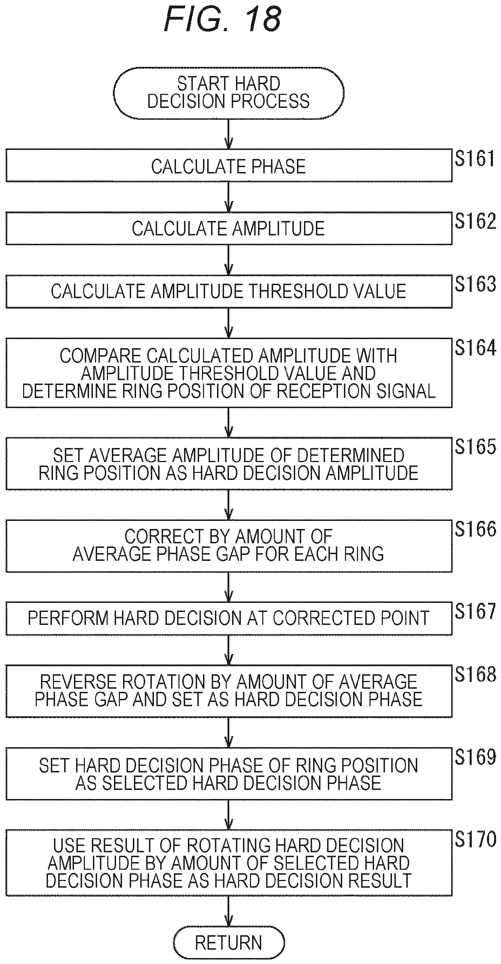

In step S122, the hard decision unit 112 performs a hard decision process in which the non-linear distortion is corrected based on the reception signal. In this case, the hard decision unit 112 inputs the average amplitude (1) to (n) and average phase gaps (1) to (n) of each ring from the amplitude/phase gap averaging unit 106 and performs a hard decision on the filtered result from the feed-forward filter 111 by using the amplitude and phase threshold processings in which the non-linear distortion is corrected. The hard decision process will be described later with reference to Fig. 18.

The hard decision unit 112 outputs the hard decision result $S'_k$ to the error calculation unit 113.

In step S123, the error calculation unit 113 obtains an equalization difference $e_k$ from an input $S_k$ to the hard decision unit 112 and the hard decision result $S'_k$, which is an output of the hard decision unit, in a manner of $e_k = S'_k - S_k$ for example, and supplies the equalization difference $e_k$ to the feed-forward filter 111.

In step S124, the feed-forward filter 111 updates a filter coefficient by using the equalization difference $e_k$ obtained in step S123. The equalization process is performed as described above.

Next, with reference to the flowchart of Fig. 17, the phase synchronization process of step S104 in Fig. 15 will be explained.

In step S141, the phase rotator 121 performs a phase correction on the input data by applying a phase rotation by an amount of $e_k^{-j\theta}$ from the oscillator 125, outputs the phase-corrected data $S_k$, as an output from the phase synchronization unit 105, to the hard decision unit 112 and phase difference detection unit 123.

In step S142, the hard decision unit 112 performs a hard decision process, in which the non-linear distortion is corrected based on the reception signal. In this case, the hard decision unit 112 inputs the average amplitude (1) to (n) and average phase gaps (1) to (n) of each ring from the amplitude/phase gap averaging unit 106 and performs a hard decision on the phase-rotated data by using the amplitude and phase threshold processings in which the non-linear distortion is corrected. The hard decision process will be described later with reference to Fig. 18.

The hard decision unit 112 outputs the hard decision result $S'_k$ to the phase difference detection unit 123.

In step S143, the phase difference detection unit 123 obtains a phase difference based on the phase-corrected data $S_k$ and hard decision result $S'_k$, in a manner of $\arg(S'_k) - \arg(S_k)$ for example. The phase difference detection unit 123 outputs the obtained phase difference to the oscillator 125 via the loop filter 124.

In step S144, the oscillator 125 oscillates on the basis of the filtered data (the obtained phase difference) and outputs the oscillated $e_k^{-j\theta}$ to the phase rotator 121 to use next phase rotation.

Next, with reference to the flowchart of Fig. 18, the hard decision process of step S122 in Fig. 16 and step S142 in Fig. 17 will be described.

The input signal $S_k$ is input to the phase calculation unit 161 and amplitude hard decision unit 162. In step S161, phase calculation unit 161 calculates a phase $\text{Arg}(S_k)$ of input signal $S_k$ and supplies the calculated phase $\text{Arg}(S_k)$ to the amplitude hard decision unit 162 and phase hard decision unit 163.

In step S162, the amplitude calculation unit 171 calculates amplitude $\text{Amp}(S_k)$ by reversing the input signal $S_k$

by an amount of $Arg(S_k)$ and taking an absolute value of the I element as described above with reference to Fig. 11, and outputs the calculated amplitude $Amp(S_k)$ to the amplitude threshold value comparison unit 173.

To the amplitude threshold value calculation unit 172 and selector 174, the average amplitude 1 to n is input. In step S163, the amplitude threshold value calculation unit 172 obtains an amplitude threshold value by calculating the above described mathematical formula (2) by using the input average amplitude 1 to n. The amplitude threshold value calculation unit 172 outputs the obtained amplitude threshold value (1) to (n-1) to the amplitude threshold value comparison unit 173.

In step S164, the amplitude threshold value comparison unit 173 compares the amplitude $Amp(S_k)$ and the amplitude threshold value (k) as expressed by the above mathematical formula (3) for example, and determines a ring position of the reception signal $S_k$. The amplitude threshold value comparison unit 173 outputs information of the determined ring position to the selector 174.

In step S165, the selector 174 outputs average amplitude of the ring position determined by the amplitude threshold value comparison unit 173 from the input average amplitude 1 to n to the rotation unit 164, as hard decision amplitude.

Further, the selector 174 supplies information of the ring position determined by the amplitude threshold value comparison unit 173 to the selector 194 of the phase hard decision unit 163.

On the other hand, in step S166, the subtractors 191-1 to 191-n correct the phase $Arg(S_k)$ from the phase calculation unit 161 by an amount of the average phase gap, for each ring.

In step S167, at the corrected points, the phase threshold value comparison units 192-1 to 192-n perform hard decisions by using a threshold value of the ideal signal point (for example, a phase average value of each point), and output the corrected hard decision phase (k), which is a hard decision phase of the ideal signal, to the adders 193-1 to 193-n.

In step S168, the adders 193-1 to 193-n reverse the rotation of the corrected hard decision phase (k) by an amount of the phase gap and output the data as a hard decision phase (k) to the selector 194.

In step S169, the selector 194 outputs the hard decision phase (k) of the ring position from the selector 174 to the rotation unit 164, as a selected hard decision phase.

In step S170, the rotation unit 164 outputs a result of rotating the hard decision amplitude from the selector 174 by an amount of the selected hard decision phase from the selector 194 to a later stage, as a hard decision result $S'_k$.

Next, with reference to the flowchart of Fig. 19, an amplitude/phase gap averaging process of step S105 in Fig. 15 will be described.

The reception signals I and Q from the phase synchronization unit 105 are input to the amplitude calculation unit 131 and phase gap calculation unit 134.

In step S181, the amplitude calculation unit 131 calculates amplitude of the reception signals I and Q and outputs the amplitude calculation result to the amplitude averaging unit 136.

Further, the symbol counter 132 performs counting and outputs the counter value to the known signal generation unit 133 and enable signal generation unit 135.

In step S182, the known signal generation unit 133 reproduces a pilot signal, which is a known signal, based on the counter value from the symbol counter 132 and generates a pilot signal. The known signal generation unit 133 outputs the generated pilot signal to the phase gap calculation unit 134.

In step S183, the phase gap calculation unit 134 compares the reception signals I, Q from the phase synchronization unit 105 and the pilot signal from the known signal generation unit 133, calculates a phase gap, and outputs the calculated phase gap to the phase gap averaging unit 137.

In step S184, based on the counter value from the symbol counter 132, the enable signal generation unit 135 generates an enable signal, which is a known signal and is to be asserted only in a case of a corresponding ring. The enable signal generation unit 135 outputs the generated enable signal to the averaging process ring corresponding to the amplitude averaging unit 136 and the averaging process ring corresponding to the phase gap averaging unit 137.

In step S185, the amplitude averaging unit 136 performs an amplitude averaging process for each ring, in response to the enable signal from the enable signal generation unit 135. In other words, in response to the enable signal from the enable signal generation unit 135, the amplitude averaging unit 136 obtains average amplitude of each ring by using the amplitude calculation result from the amplitude calculation unit 131 and outputs the obtained average amplitude to the equalizing unit 104 and phase synchronization unit 105. The output average amplitude is used in the equalization process of step S13 in Fig. 15 and in the phase synchronization process in the step S14.

In step S186, in response to the enable signals from the enable signal generation unit 135, the phase gap averaging unit 137 performs a phase gap averaging process for each ring. In other words, in response to the enable signals from the enable signal generation unit 135, the phase gap averaging unit 137 obtains an average phase gap of each ring by using the phase gap from the phase gap calculation unit 134 and outputs the obtained average phase gap to the equalizing unit 104 and phase synchronization unit 105. The output average phase gap is used in the equalization process of step S103 in Fig. 15 and in the phase synchronization process of step S104. In this manner, the amplitude/phase gap averaging process ends.

As described above, according to the present technology, the hard decision unit 112 may be composed of six multipliers in total (two multipliers in the multiplication unit 182 for amplitude calculation and four multipliers in the rotation unit 164 for phase rotation) regardless of the number of constellation points.

Thus, according to the present technology, since the number of the multipliers becomes a quite small number, the circuit size of the entire reception device can be reduced. This configuration realizes non-linear distortion compensation of the hard decision at low cost.

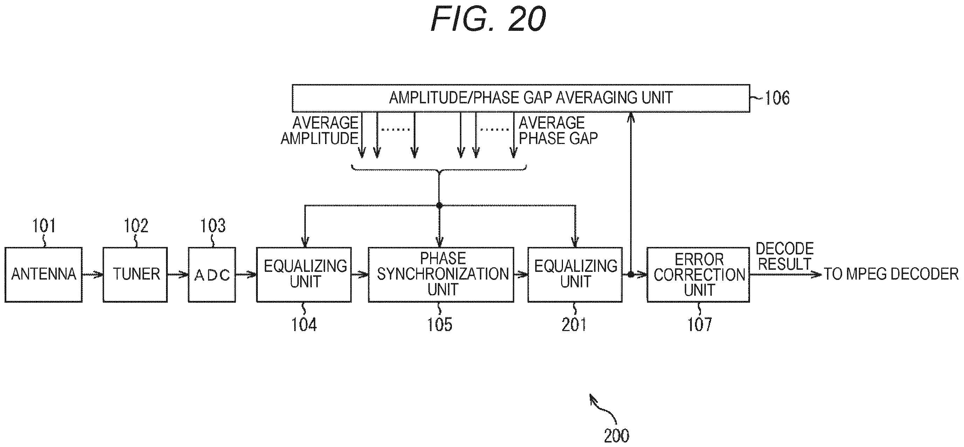

Here, the example of Fig. 6 illustrates an example in which the equalizing unit 104 composed of an FFE is used as a unit for performing a hard decision according to the present technology; however, in the example of Fig. 6, the reception device may be composed with a equalizing unit 201 including a decision feedback equalizer (DFE) of Fig. 20, which will be described next, as a substitute for the equalizing unit 104. In this case, the hard decision result is used as an input to feed-back filter, in addition to the calculation of an equalization difference. Thus, the processing performance can be improved.

Further, in the example of Fig. 6, as a unit for performing the hard decision according to the present technology, the reception device may be composed as switching the order of the equalizing unit 104 and phase synchronization unit 105. In the example of Fig. 6, similarly in the case of including the equalizing unit 201, the reception device may be composed as switching the order of the equalizing unit 201 and phase synchronization unit 105, as a substitute for the equalizing unit 104.

Further, the reception device may be composed only with the phase synchronization unit 105 without the equalizing unit 104, as a unit for performing a hard decision, based on the reception device 100 in the example of Fig. 6, or the reception device may be composed only with the equalizing unit 104 without the phase synchronization unit 105. Further, in the example of Fig. 6, similarly in the case of including the equalizing unit 201 as a substitute for the equalizing unit 104, the reception device may be composed only with the equalizing unit 201 without the phase synchronization unit 105.

<2. Second embodiment>

<Another configuration example of reception device according to the present technology>

Fig. 20 is a block diagram illustrating another configuration example of the reception device to which the present technology is applied.

In an example of Fig. 20, a reception device 200 is different from the reception device 100 of Fig. 6 on that an equalizing unit 201 composed of a DFE is added in a later stage of the phase synchronization unit 105.

In the example of Fig. 20, the reception device 200 is common with the reception device 100 of Fig. 6 on that an antenna 101, a tuner 102, an analog to digital convertor (ADC) 103, an equalizing unit 104, a phase synchronization unit 105, an amplitude/phase gap averaging unit 106, and an error correction unit 107 are included.

In other words, the phase synchronization unit 105 performs a phase correction on data from the equalizing unit 104 and outputs the phase-corrected data to the equalizing unit 201.

The equalizing unit 201 is composed of a decision feedback equalizer (DFE) including both of a feed-forward filter and a feed-back filter, for example. The equalizing unit 201 performs an equalization process on data from the phase synchronization unit 105 and outputs the data, on which the equalization process is processed, to the amplitude/phase gap averaging unit 106 and error correction unit 107. Here, when performing the equalization process, the equalizing unit 201 inputs the average amplitude and average phase gap of each ring from the amplitude/phase gap averaging unit 106, corrects the amplitude and phase threshold processings, and performs a hard decision by using the corrected amplitude and phase threshold processings.

The amplitude/phase gap averaging unit 106 outputs the average amplitude and average phase gap of each ring to the equalizing unit 104, phase synchronization unit 105, and equalizing unit 201.

<Configuration example of equalizing unit>

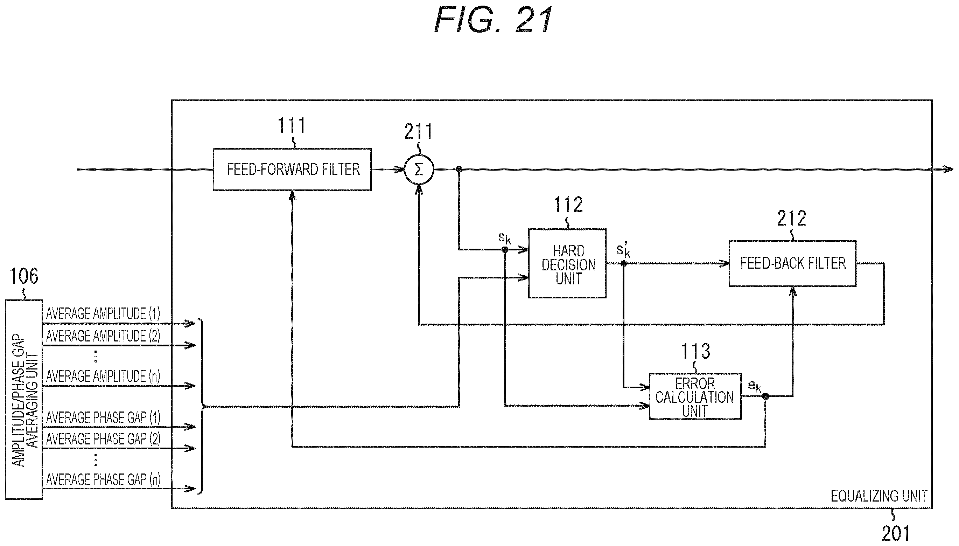

Fig. 21 is a block diagram illustrating a configuration example of an equalizing unit.

In the example of Fig. 21, the equalizing unit 201 is common with the equalizing unit 104 of Fig. 7 on that the feed-forward filter 111, hard decision unit 112, and error calculation unit 113 are included.

In the example of Fig. 21, the equalizing unit 201 is different from the equalizing unit 104 of Fig. 7 on that an accumulator 211 and a feed-back filter 212 are added.

The feed-forward filter 111 filters input data and outputs the data to the accumulator 211. The accumulator 211 adds the output from the feed-forward filter 111 and the output from the feed-back filter 212 and outputs the data, as an output from the equalizing unit 201, to the error correction unit 107 as well as to the hard decision unit 112.

The hard decision unit 112 performs a hard decision, in which the non-linear distortion is corrected based on the reception signal. In this case, the hard decision unit 112 inputs the average amplitude (1) to (n) and the average phase gaps (1) to (n) of each ring from the amplitude/phase gap averaging unit 106, corrects the amplitude and phase threshold processings, and performs a hard decision on the adding result by the accumulator 211 by using the corrected amplitude and phase threshold processings. The hard decision unit 112 outputs a hard decision result $S'_k$ to the error calculation unit 113 and feed-back filter 212.

The error calculation unit 113 obtains an equalization difference $e_k$ from an input $S_k$ input to the hard decision unit 112 and a hard decision result $S'_k$ output from the hard decision unit 112, in a manner of $e_k = S'_k - S_k$ for example, and supplies the data to the feed-forward filter 111 and feed-back filter 212.

The feed-back filter 212 is a variable coefficient filter. The feed-back filter 212 filters hard decision result $S'_k$ from the hard decision unit 112 and outputs the data to the accumulator 211. In other words, the feed-back filter 212 performs a convolution calculation on the hard decision result $S'_k$ from the hard decision unit 112 with a filter coefficient, and outputs a signal obtained as a result of the convolution calculation to the accumulator 211.

Further, similarly to the feed-forward filter 111, the feed-back filter 212 updates the filter coefficient by using the equalization difference from the error calculation unit 113. As a coefficient update algorism, for example, a least mean squuare (LMS) algorism is used. Here, another algorism may be used.

Here, in the equalizing unit 201 of Fig. 21, similarly to the case of the equalizing unit 104 of Fig. 7, the hard decision result is used in a calculation of a common difference error and is also used as an input to the feed-back filter 212.

<Example of process by reception device>

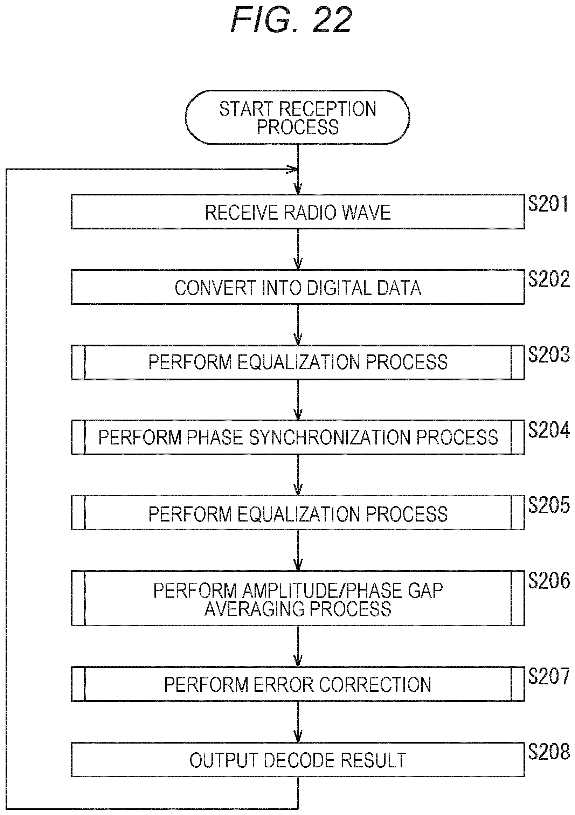

Next, with reference to the flowchart of Fig. 22, a reception process of the reception device 200 of Fig. 20 will be described. Here, steps S201 to S204 and S206 to S208 of Fig. 22 are processes which are basically similar to steps S101 to S104 and S105 to S107 of Fig. 15 and the explanation thereof will be omitted according to need.

In other words, in step S204, the phase synchronization unit 105 performs a phase correction on the data from the equalizing unit 104 and outputs the phase-corrected data to the equalizing unit 201. The details of the phase synchronization process are basically similar to the process which is described the above with reference to Fig. 17, and the explanation thereof will be omitted.

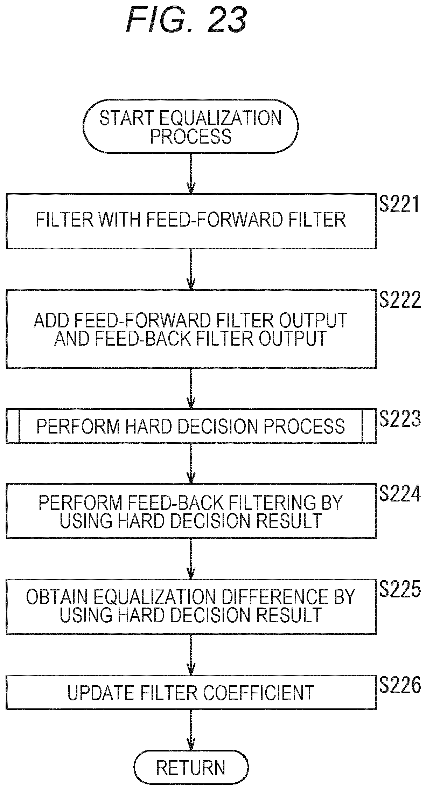

In step S205, the equalizing unit 201 performs an equalization process on the data from the phase synchronization unit 105 and outputs the data, on which the equalization process is performed, to the amplitude/phase gap averaging unit 106 and error correction unit 107. Here, when performing the equalization process, the equalizing unit 201 inputs the average amplitude and average phase gap of each ring from the amplitude/phase gap averaging unit 106, corrects the amplitude and phase threshold processings, and performs a hard decision by using the corrected amplitude and phase threshold processings. The details of the equalization process will be described later with reference to Fig. 23.

In step S206, the amplitude/phase gap averaging unit 106 averages the amplitude and phase gap of the reception signal, for each ring. The amplitude/phase gap averaging unit 106 outputs the average amplitude and average phase gap of each ring to the equalizing unit 104, phase synchronization unit 105, and equalizing unit 201.

Next, with reference to the flowchart of Fig. 23, the equalization process of step S205 in Fig. 22 will be described.

In step S221, the feed-forward filter 111 filters the input data with a feed-forward filter and outputs the data to the accumulator 211.

In step S222, the accumulator 211 adds the output from the feed-forward filter 111 and the output from the feed-back filter 212 and outputs the data, as an output from the equalizing unit 201, to the phase synchronization unit 105 as well as to the hard decision unit 112.

In step S223, the hard decision unit 112 performs a hard decision, in which the non-linear distortion is corrected based on the reception signal. In this case, the hard decision unit 112 inputs the average amplitude (1) to (n) and average phase gaps (1) to (n) of each ring from the amplitude/phase gap averaging unit 106, corrects the amplitude and phase threshold processings, and performs a hard decision on the adding result by the accumulator 211 by using the corrected amplitude and phase threshold processings. The hard decision unit 112 outputs a hard decision result $S'_k$ to the error calculation unit 113 and feed-back filter 212. Since this hard decision process has been described with reference to Fig. 18, the detailed explanation thereof will be omitted to avoid repetition.

In step S224, the feed-back filter 212 filters the hard decision result $S'_k$ from the hard decision unit 112 and outputs the data to the accumulator 211.

In step S225, the error calculation unit 113 obtains an equalization difference $e_k$ from the input $S_k$ input to the hard decision unit 112 and the hard decision result $S'_k$ output from the hard decision unit 112 in a manner of $e_k = S'_k - S_k$ for example, and supplies the data to the feed-forward filter 111 and feed-back filter 212.

In step S226, the feed-forward filter 111 and feed-back filter 212 update a filter coefficient by using the equalization difference $e_k$ obtained in step S225. In this manner, the equalization process is performed.

Here, the reception device 200 of Fig. 20 includes the equalizing unit 104, phase synchronization unit 105, and equalizing unit 201 separately; however, in the following, a reception device in which the phase synchronization unit 105 and the equalizing unit 201 of DFE are integrally configured as an equalization/phase synchronization unit.

<3. Third embodiment>

<Another configuration example of reception device according to the present technology>

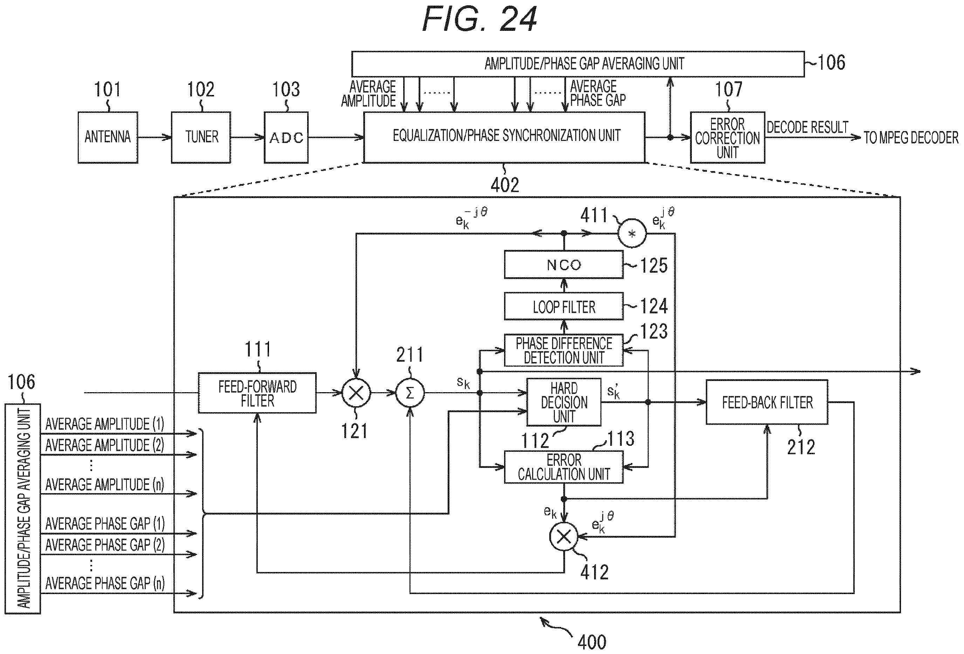

Fig. 24 is a block diagram illustrating still another configuration example of a reception device to which the present technology is applied.

In the example of Fig. 24, a reception device 400 is different from the reception device 200 of Fig. 20 on that the equalizing unit 104 is excluded and that the equalizing unit 201 and phase synchronization unit 105 are integrally configured as an equalization/phase synchronization unit 402.

In the example of Fig. 24, the reception device 400 is common with the reception device 200 of Fig. 20 on that an antenna 101, a tuner 102, an analog to digital convertor (ADC) 103, an amplitude/phase gap averaging unit 106, and an error correction unit 107 are included.

In other words, the equalization/phase synchronization unit 402 has a function of the phase synchronization unit 105 and a function of the equalizing unit 201 of Fig. 20.

Similarly to the phase synchronization unit 105 illustrated in Fig. 8, the equalization/phase synchronization unit 402 includes a phase rotator 121, a hard decision unit 112, a phase difference detection unit 123, a loop filter 124, and an oscillator 125. Further, similarly to the equalizing unit 201 illustrated in Fig. 21, the equalization/phase synchronization unit 402 includes a feed-forward filter 111, an accumulator 211, a hard decision unit 112, a feed-back filter 212, and an error calculation unit 113.

Here, the equalization/phase synchronization unit 402 is different from the phase synchronization unit 105 of Fig. 8 and the equalizing unit 201 of Fig. 21 on that a converter 411 and a phase rotator 412 are added.

The feed-forward filter 111 filters input data with a feed-forward filter and outputs the data to the phase rotator 121.

The phase rotator 121 performs a phase correction by applying a phase rotation only by an amount of $e_k^{-j\theta}$ from the oscillator 125 and outputs the phase-corrected data $S_k$ to the accumulator 211. The accumulator 211 adds the output from the feed-forward filter 111 via the phase rotator 121 and the output from the feed-back filter 212 and outputs the data to the equalization/phase synchronization unit 402 as well as to the hard decision unit 112, error calculation unit 113, and phase difference detection unit 123.

The hard decision unit 112 performs a hard decision, in which the non-linear distortion is corrected based on the reception signal. In this case, the hard decision unit 112 inputs the average amplitude (1) to (n) and the average phase gaps (1) to (n) of each ring from the amplitude/phase gap averaging unit 106, corrects the amplitude and phase threshold processings, and performs a hard decision on the adding result by the accumulator 211 by using the corrected amplitude and phase threshold processings. The hard decision unit 112 outputs a hard decision result $S'_k$ to the phase difference detection unit 123, error calculation unit 113, and feed-back filter 212.

Based on the phase-corrected data $S_k$ and hard decision result $S'_k$ from the accumulator 211, the phase difference detection unit 123 obtains a phase difference, in a manner of arg $(S'_k)$-arg$(S_k)$ for example. The phase difference detection unit 123 outputs the obtained phase difference to the loop filter 124.

The loop filter 124 filters the phase difference with a loop filter and outputs the filtered data to the oscillator 125. The oscillator 125 oscillates on the basis of the filtered data and outputs $e_k^{-j\theta}$ to the phase rotator 121 and converter 411. Further, the converter 411 converts $e_k^{-j\theta}$ into $e_k^{j\theta}$ and outputs $e_k^{j\theta}$ to the phase rotator 412.

Based on the input $S_k$ input to the hard decision unit 112 and the hard decision result $S'_k$ output from the hard decision unit 112, the error calculation unit 113 obtains an equalization difference $e_k$, in a manner of $e_k = S'_k - S_k$ for example, supplies the equalization difference $e_k$ to the feed-forward filter 111 via the phase rotator 412, and supplies the equalization difference $e_k$ directly to the feed-back filter 212.

The feed-back filter 212 filters the hard decision result $S'_k$ from the hard decision unit 112 with a feed-back filter and outputs the data to the accumulator 211.

The phase rotator 412 reverses the phase rotation applied by the phase rotator 121 by an amount of $e_k^{j\theta}$, and supplies the equalization difference $e_k$ from the error calculation unit 113 to the feed-forward filter 111. The $e_k^{j\theta}$ in which the phase rotation is reversed is used to update the filter coefficient of the feed-forward filter 111.

<Example of process by reception device>

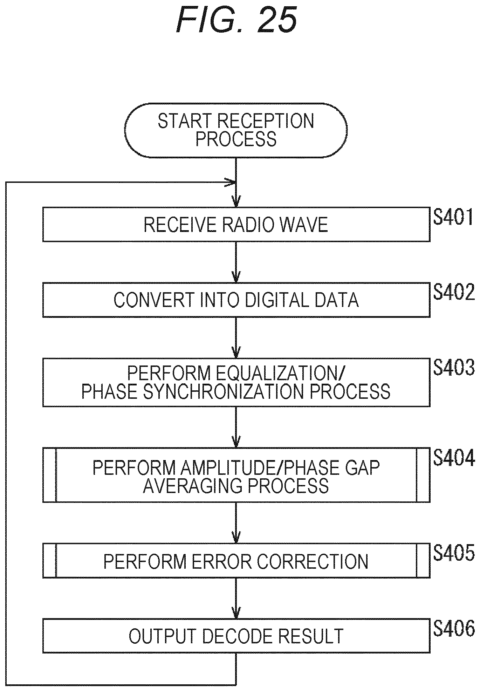

Next, with reference to the flowchart of Fig. 25, a reception process of the reception device 400 will be described.

In step S401, the antenna 101 receives a radio wave (a broadcast signal) and outputs the received broadcast signal to the ADC 103 via the tuner 102.

In step S402, the ADC 103 converts an analogue broadcast signal from the tuner 102 into digital data and outputs the converted digital data to the equalization/phase synchronization unit 402 via a timing synchronization unit 401.

In step S403, the equalization/phase synchronization unit 402 performs an equalization process and a phase synchronization process on the data from the timing synchronization unit 401 and outputs the data, on which the equalization process and phase synchronization process are performed, to the amplitude/phase gap averaging unit 106 and error correction unit 107. Here, in these equalization and phase synchronization processes, the average amplitude and average phase gap of each ring from the amplitude/phase gap averaging unit 106 are input, correction is performed on the amplitude and phase threshold processing, and a hard decision by using the corrected amplitude and phase threshold processings is performed. Since the equalization and phase synchronization processes are practically similar to a process, which is a combination of the phase synchronization process described above with reference to Fig. 17 and an equalization process described above with reference to Fig. 23, the explanation thereof will be omitted to avoid the repetition.

In step S404, the amplitude/phase gap averaging unit 106 averages the amplitude and phase gaps of reception signals for each ring. The amplitude/phase gap averaging unit 106 outputs the average amplitude and average phase gap of each ring to the equalization/phase synchronization unit 402.

In step S405, The error correction unit 107 performs a predetermined error correction defined by the broadcasting standard and in step S406, outputs the error-corrected data, as a decode result, to an unillustrated MPEG decoder in a later stage.

After step S406, the process returns to step S401 and the subsequent processes are repeated.

As described above, according to the present technology, in the hard decision process, use of multipliers can be reduced as much as possible. In other words, according to the present technology, since the number of the multipliers is made much smaller, the circuit size of the entire reception device can be reduced. With this configuration, the non-linear distortion compensation in a hard decision can be realized at low cost.

Here, the above description describes an example that a known signal (a pilot signal) is included in a reception signal in an averaging process in the amplitude/phase gap averaging unit 106. However, for example, in a case of a broadcasting standard, which does not include a corrected known signal, such as DVB-S2, a satellite standard mainly targeting Europe, which does not include a known signal of a modulation method same as a method used in the data zone, a signal that is the error-corrected decode result remodulated with the modulation method same as the method used when transmission (a remodulated signal) may be used as described in the following.

<4. Fourth embodiment>

<Another configuration example of reception device according to the present technology>

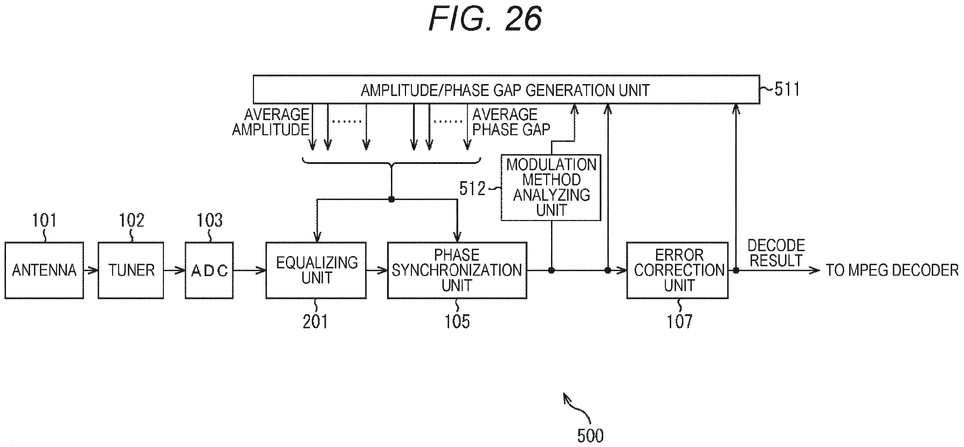

Fig. 26 is a block diagram illustrating a configuration example of a reception device to which the present technology is applied.

In the example of Fig. 26, the reception device 500 is in common with the reception device 100 of Fig. 6 on that an antenna 101, a tuner 102, an analog to digital convertor (ADC) 103, a phase synchronization unit 105, and an error correction unit 107 are included.

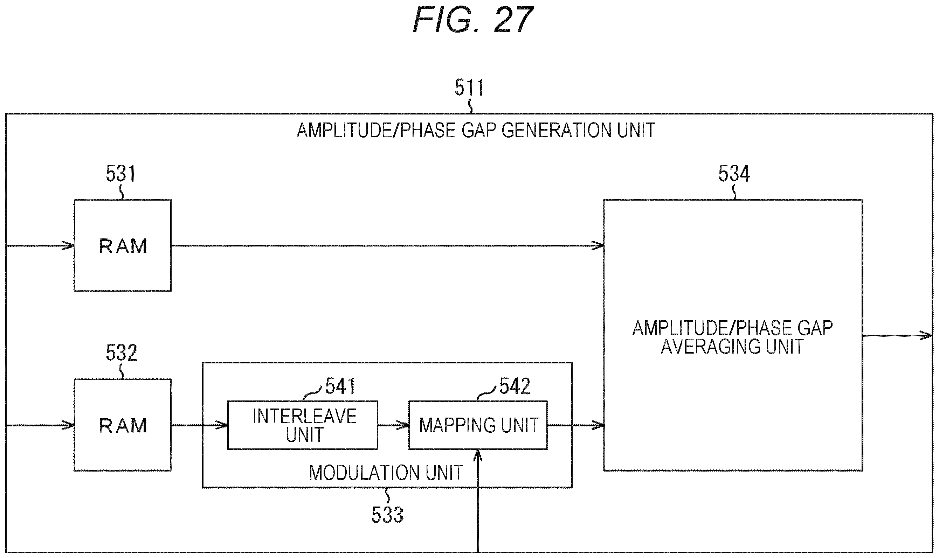

In the example of Fig. 26, the reception device 500 is different from the reception device 100 of Fig. 6 on that the equalizing unit 104 is replaced with the equalizing unit 201 of Fig. 20, that the amplitude/phase gap averaging unit 106 is replaced with an amplitude/phase gap generation unit 511 including an amplitude/phase gap averaging unit 534 (Fig. 27), and that a modulation method analyzing unit 512 is added.

In other words, the equalizing unit 201 performs an equalization process on data from the ADC 103 and outputs the data, to which the equalization process is performed, to the phase synchronization unit 105. Here, when performing the equalization process, the equalizing unit 201 inputs the average amplitude and average phases gap of each ring, which are distortion information from the amplitude/phase gap generation unit 511, corrects amplitude and phase threshold processings, and performs a hard decision by using the corrected amplitude and phase threshold processings.

The phase synchronization unit 105 performs a phase correction on data from the equalizing unit 201, outputs the phase-corrected data to the modulation method analyzing unit 512, amplitude/phase gap generation unit 511, and error correction unit 107. Here, when performing the phase correction, the phase synchronization unit 105 inputs the average amplitude and average phase gap of each ring from the amplitude/phase gap generation unit 511, corrects amplitude and phase threshold processings, and performs a hard decision by using the corrected amplitude and phase threshold processings.

The amplitude/phase gap generation unit 511 generates a modulation signal by remodulating by a modulation method same as the method used in transmission, compares the signal before remodulation and the signal after the remodulation, averaging the amplitude and phase gap of each ring of the signal before remodulation, and generates average amplitude and average phase gap of each ring. In this process, the reception signal from the phase synchronization unit 105, modulation method information that indicates a modulation method of the data zone in the reception signal from the modulation method analyzing unit 512, and a decode result from the error correction unit 107 are used. The amplitude/phase gap averaging unit 106 outputs average amplitude and average phase gap of each ring to the equalizing unit 201 and phase synchronization unit 105.

From I signal and Q signal supplied from the phase synchronization unit 105, the modulation method analyzing unit 512 decodes modulation method information that indicates the modulation method of the data zone in the reception signal. The modulation method analyzing unit 512 supplies the decode result to the amplitude/phase gap generation unit 511. For example, when the broadcasting standard is DVB-S2, modulation method information is stored in a part called a PLS code.

The error correction unit 107 performs a predetermined error correction process defined by the broadcasting standard. For example, when the broadcasting standard is DVB-S2, an LDPC encoding/decoding process or the like is used. The error correction unit 107 outputs the error-corrected data to the amplitude/phase gap generation unit 511 and transfers the data, as a decode result, to an unillustrated MPEG decoder in a later stage.

<Configuration example of amplitude/phase gap generation unit>

Fig. 27 is a block diagram illustrating a configuration example of the amplitude/phase gap generation unit of Fig. 26.

The amplitude/phase gap generation unit 511 of Fig. 27 includes random access memories (RAM) 531 and 532, a modulation unit 533, and an amplitude/phase gap averaging unit 534.

The RAM 531 stores I signal and Q signal before an FEC process, which are provided from the phase synchronization unit 105 of Fig. 26. The RAM 532 stores data provided from the error correction unit 107.

The modulation unit 533 is composed of an interleave unit 541 and a mapping unit 542. Based on the modulation method of the data zone included in the modulation method information supplied from the modulation method analyzing unit 512 of Fig. 26, the modulation unit 533 generates a modulation signal by performing again a modulation defined by a standard on the data stored in the RAM 532.

More specifically, the interleave unit 541 reads, from the RAM 532, data corresponding to the I signal and Q signal read from the RAM 531. The interleave unit 541 bit-interleaves the read data and supplies the data obtained as a result to the mapping unit 542.

The mapping unit 542 maps the data supplied from the interleave unit 541 with a modulation method included in the modulation method information from the modulation method analyzing unit 512 and generates a signal of a signal point of a transmission signal corresponding to the data. The mapping unit 542 supplies the generated signal, as a modulation signal, to the amplitude/phase gap averaging unit 534.

The amplitude/phase gap averaging unit 534 reads the I signal and Q signal from the RAM 531. The amplitude/phase gap averaging unit 534 averages, for each ring, the amplitude and phase gap of the modulation signal supplied from the modulation unit 533 and the signal before error correction, which corresponds to the modulation signal, and generates the average amplitude and average phase gap of each ring.

The amplitude/phase gap averaging unit 534 supplies the average amplitude and average phase gap of each ring of the modulation method included in current modulation method information to the equalizing unit 201 and phase synchronization unit 105 of Fig. 26.

<Configuration example of amplitude/phase gap averaging unit>

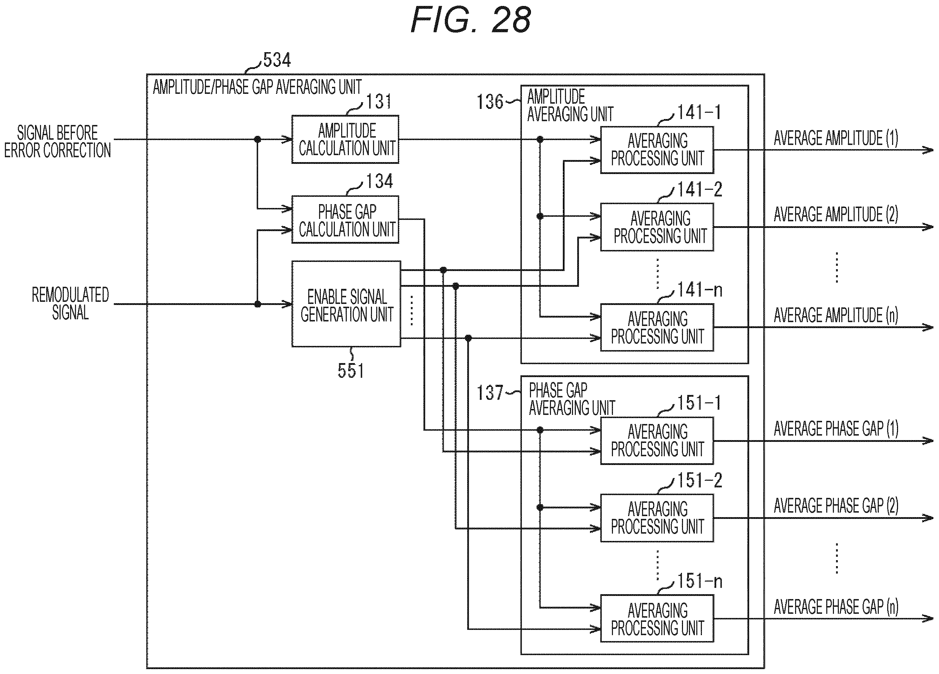

Fig. 28 is a block diagram illustrating a configuration example of an amplitude/phase gap averaging unit.

In the example of Fig. 28, the amplitude/phase gap averaging unit 534 is in common with the amplitude/phase gap averaging unit 106 of Fig. 9 in that an amplitude calculation unit 131, a phase gap calculation unit 134, an amplitude averaging unit 136, and a phase gap averaging unit 137 are included.

In the example of Fig. 28, the amplitude/phase gap averaging unit 534 is different from the amplitude/phase gap averaging unit 106 of Fig. 9 on that the symbol counter 132 and known signal generation unit 133 are excluded and that the enable signal generation unit 135 is replaced with an enable signal generation unit 551.

Further, in the example of Fig. 28, the amplitude/phase gap averaging unit 534 is different from the amplitude/phase gap averaging unit 106 of Fig. 9 on that a signal after remodulation is input from the modulation unit 533 (Fig. 27) to the phase gap calculation unit 134 and enable signal generation unit 551.

The reception signals I and Q from the RAM 531 are input to the amplitude calculation unit 131 and phase gap calculation unit 134. The signal after the remodulation from the modulation unit 533 is input to the phase gap calculation unit 134 and enable signal generation unit 551.

The amplitude calculation unit 131 performs an amplitude calculation of the reception signals I and Q and outputs the amplitude calculation result to the amplitude averaging unit 136.

The phase gap calculation unit 134 calculates a phase gap by comparing the reception signals I and Q from the phase synchronization unit 105 and a remodulated signal from the modulation unit 533 and outputs the calculated phase gap to the phase gap averaging unit 137.

The enable signal generation unit 551 determines, based on the remodulated signal, which ring the current symbol (signal) exists and generates an enable signal which is to be asserted only in the case of the ring. The enable signal generation unit 551 outputs the generated enable signal to an averaging process ring corresponding to the amplitude averaging unit 136 and an averaging process ring corresponding to the phase gap averaging unit 137.

The amplitude/phase gap averaging unit 534 needs to assert an enable signal of a correct ring position to accurately average for each ring. Thus, the enable signal is generated by using a remodulated signal, which is assumed more accurate than a signal before the error correction.

<Example of process by reception device>

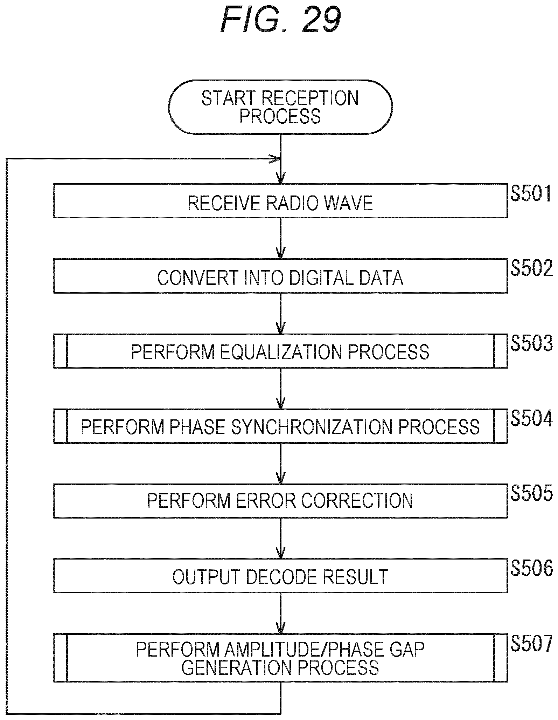

Next, with reference to the flowchart of Fig. 29, a reception process of the reception device 500 will be described. Here, in steps S501 to S504 of Fig. 29, processes which are basically similar to the processes in steps S101 to S104 of Fig. 15 are performed, so the explanation thereof will be omitted according to need to avoid repetition.

In other words, in step S504, the phase synchronization unit 105 performs a phase correction on the data from the equalizing unit 104 and outputs the phase-corrected data to the amplitude/phase gap generation unit 511 and error correction unit 107.

The error correction unit 107 performs a predetermined error correction defined by a broadcasting standard in step S505, and outputs the error-corrected data, as a decode result to the unillustrated MPEG decoder in a later stage as well as to the amplitude/phase gap generation unit 511 in S506.

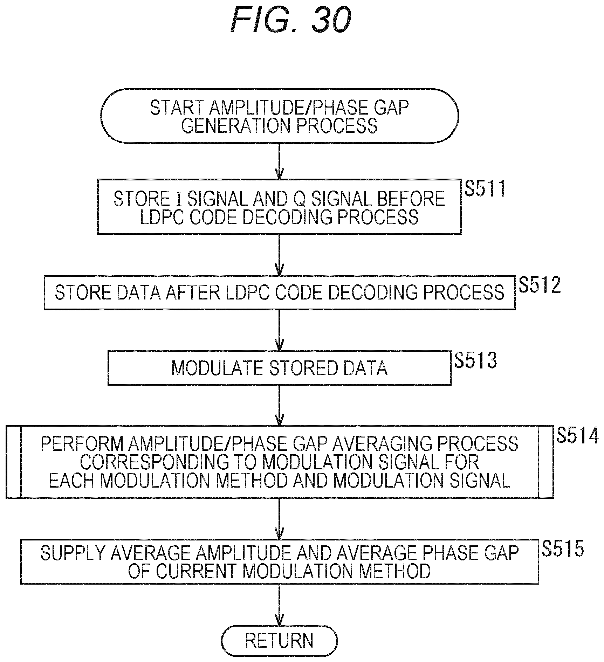

In step S507, the amplitude/phase gap generation unit 511 generates a modulation signal by remodulating with a modulation method same as the method used in transmission, averages, for each ring, the amplitude and phase gaps of signals before the error correction corresponding to the modulation signal, and generates the amplitude and phase gap of each ring as distortion information that indicates non-linear distortion occurs in each modulation signal, as a reception signal of each signal point. This amplitude/phase gap generation process will be described later with reference to Fig. 30.

Here, in this process, a reception signal from the phase synchronization unit 105, modulation method information from the modulation method analyzing unit 512, and a decode result from the error correction unit 107 are used. The amplitude/phase gap generation unit 511 outputs the average amplitude and average phase gap of each ring to the equalizing unit 201 and phase synchronization unit 105.

After step S507, the process returns to step S501 and the subsequent processes are repeated.

Next, with reference to the flowchart of Fig. 30, the amplitude/phase gap generation process of step S507 in Fig. 29 will be described.

In step S511, the RAM 531 (Fig. 27) of the amplitude/phase gap generation unit 511 stores the I signal and Q signal before the error correction supplied from the equalizing unit 201. In step S512, the RAM 532 stores data after the error correction supplied from the error correction unit 107.

In step S513, the modulation unit 533 generates a modulation signal by remodulating data stored in the RAM 531 with a modulation method included in the modulation method information supplied from the modulation method analyzing unit 512. The modulation unit 533 supplies the generated signal, as a modulation signal, to the amplitude/phase gap averaging unit 534.

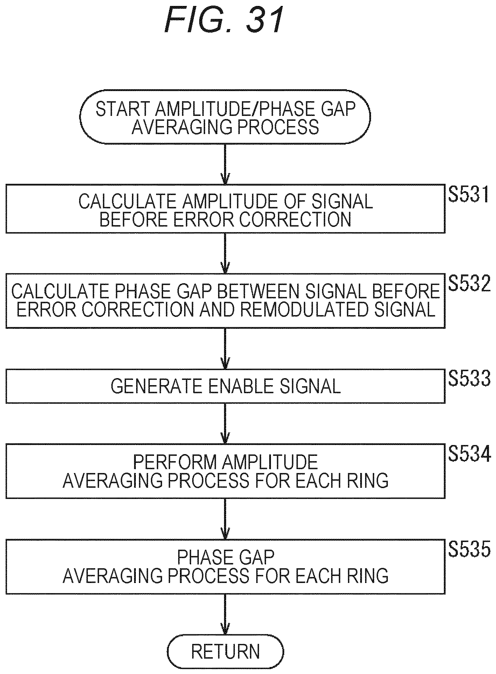

In step S514, the amplitude/phase gap averaging unit 534 performs an amplitude/phase gap averaging process of the signals before the error correction corresponding to the modulation signals from the modulation unit 533. This amplitude/phase gap averaging process will be described later with reference to Fig. 31.

In step S515, the amplitude/phase gap averaging unit 534 supplies the average amplitude and average phase gap of each ring of the modulation method included in the generated current modulation method information to the equalizing unit 201 and phase synchronization unit 105.

With this configuration, the average amplitude and average phase gap of each ring used in a hard decision by the equalizing unit 201 (Fig. 21) and phase synchronization unit 105 (Fig. 8) are updated. Then, the process returns to step S507 of Fig. 29.

Next, with reference to the flowchart of Fig. 31, the amplitude/phase gap averaging process in step S514 of Fig. 30 will be described.

The signals I and Q before the error correction from the phase synchronization unit 105 are input to the amplitude calculation unit 131 and phase gap calculation unit 134.

In step S531, the amplitude calculation unit 131 performs an amplitude calculation of the signals I and Q before the error correction and outputs the amplitude calculation result to the amplitude averaging unit 136.

The remodulated signal from the modulation unit 533 is input to the phase gap calculation unit 134 and enable signal generation unit 551.

In step S532, the phase gap calculation unit 134 calculates a phase gap by comparing the signals I and Q before the error correction from the phase synchronization unit 105 and the remodulated signals from the modulation unit 533 and outputs the calculated phase gap to the phase gap averaging unit 137.

In step S533, the enable signal generation unit 551 determines which ring the current symbol (signal) exists based on the remodulated signals and generates an enable signal to be asserted only in a case of the ring. The enable signal generation unit 551 outputs the generated enable signal to the averaging process ring corresponding to the amplitude averaging unit 136 and the averaging process ring corresponding to the phase gap averaging unit 137.

Since the processes in subsequent steps S534 and S535 are basically similarly to the processes in step S185 and S186 of Fig. 19, the explanation thereof will be omitted.

As described above, the reception device 500 generates a modulation signal by remodulating the error-corrected data of the reception signal, and can average, for each ring, the amplitude and phase gap before the error correction, corresponding to the modulation signal. With this configuration, even when a reception signal, which does not include a known signal of a modulation method same as the method of the data zone, is used, the non-linear distortion compensation of the hard decision can be realized with a circuit size having a further reduced number of multipliers. With this configuration, the non-linear distortion compensation of the hard decision can be realized at low cost.

Here, the error correction unit 107 may determine a success of the error correction. In this case, the reception device 500 (amplitude/phase gap generation unit 511) generates a modulation signal by remodulating data after the error correction of the reception signal and can average, for each ring, the amplitude and phase gap corresponding to the data in which the error correction is successful among the signals before the error correction corresponding to the modulation signal. With this configuration, average amplitude and average phase gap of each ring can be accurately generated.

Further, the equalizing unit 201 is a DFE, which uses both of the feed-forward filter and feed-back filter; however, a linear equalizer such as an equalizing unit 104 that uses only the feed-forward filter may be used. In this case, the equalizing unit 104 corrects the hard decision on the basis of the average amplitude and average phase gap of each ring.

Here, the fourth embodiment has described DVB-S2 and the like as an example, as a broadcasting standard that does not have a known signal for correction; however, the present technology may be applied to another broadcasting standard that does not include a known signal for correction. It is noted that the present technology can be applied in a case of a known signal for correction such as ARIB STD-B44 for example.

Further, the above explanation has described a hard decision for amplitude phase shift keying (APSK); however the present technology may also be applied to a hard decision for amplitude shift keying (ASK).

The above described series of processes may be executed by hardware or may be executed by software. When the series of processes are executed by software, a program composing the software is installed to a computer. Here, the computer may be a computer mounted in a dedicated hardware, a general personal computer which executes various functions by installing various programs, or the like.

<5. Fifth embodiment>

<Configuration example of computer>

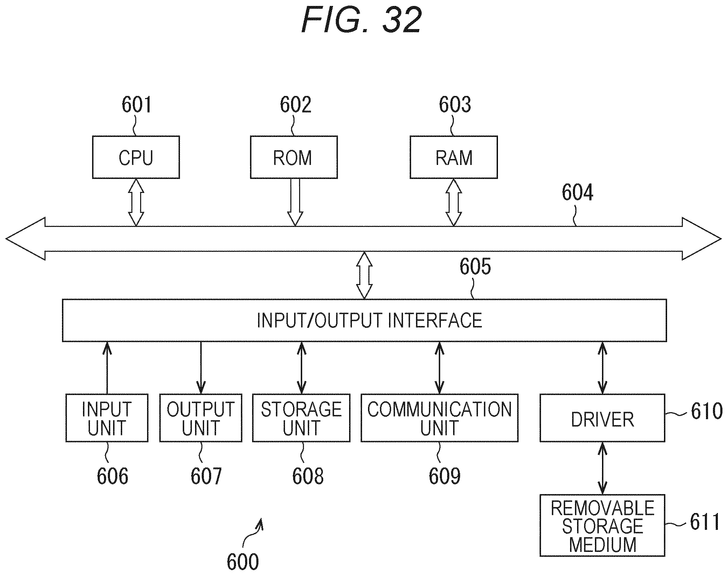

Fig. 32 is a block diagram illustrating a configuration example of hardware of a computer that executes the above described series of processes by programs.

In a computer 600, a central processing unit (CPU) 601, a read only memory (ROM) 602, and a random access memory (RAM) 603 are connected with one another via a bus 604.

To the bus 604, an input/output interface 605 is further connected. To the input/output interface 605, an input unit 606, an output unit 607, a storage unit 608, a communication unit 609, and a driver 610 are connected.

The input unit 606 is composed of a keyboard, a mouse, a microphone, and the like. The output unit 607 is composed of a display, a speaker, and the like. The storage unit 608 is composed of a hard disk, a non-volatile memory, and the like. The communication unit 609 is composed of a network interface and the like. The driver 610 drives a removable storage medium 611 such as a magnetic disk, an optical disk, a magnetic optical disk, and a semiconductor memory.

In the computer configured as described above, for example, the CPU 601 loads the program stored in the storage unit 608 to the RAM 603 via the input/output interface 605 and bus 604 and executes the program so that the above described series of the processes are executed.

The program that the computer (CPU 601) executes may be stored and provided in a removable storage medium 611 as a packaged medium or the like, for example. Further, the program may be provided via a wired or wireless transmission medium such as a local area network, the Internet, and a digital broadcasting.

In the computer, the program can be installed to the storage unit 608 via the input/output interface 605 by attaching the removable storage medium 611 to the driver 610. Further, the program may be installed to the storage unit 608 by receiving by the communication unit 609 via a wired or wireless transmission medium. In addition, the program may be installed to the ROM 602 and storage unit 608 in advance.

Here, the program executed by the computer may be a program that the programs are executed in chronological order according to the order described in this specification or may be a program that the processes are executed in parallel at necessary timings according to a call, for example.

Here, according to this specification, the terms of the system represent an entire device composed of a plurality of devices, blocks, methods, or the like.

Further, the embodiments of this disclosure are not limited to the above described embodiments and various modifications may be made within a scope of this disclosure.

Further, this disclosure may be in a cloud computing configuration in which a single function may be processed by a plurality of divides by sharing and working together via a network.

Further, each step described in the above flowchart may be executed by a single device or may be execute by being shared in a plurality of devices.

Further, when there are a plurality of processes included in one step, the plurality of processes included in the single step may be executed by being shared in a plurality of devices in addition to being executed by a single device.

Further, a configuration explained as a single device (or a processing unit) in the above description may be divided and configured as a plurality of devices (or processing units). On the other hand, a configuration explained as a plurality of devices (or processing units) in the above description may be configured as a single device (or a processing unit). Further, a configuration other than the above described configuration may also be added to each device (or each processing unit) . Further, when the configuration or operation as the entire system is substantially the same, a part of a device (or processing unit) may be included in a configuration of another device (or another processing unit) . In other words, the present technology is not limited to the above described embodiments and various changes may be made within the scope of the present technology.

In the above, preferred embodiments of the present disclosure have been described with reference to the attached drawings; however, the disclosure is not limited to the examples. It is clear for a person skilled in the related art that various changes and modifications within a scope of the claims are a part of technical range of the present technology, and it is understood that those changes and modifications belong to the technical scope of this disclosure.

It is noted that the present technology may be configured in the following configurations.

(1) A reception device including
a hard decision unit configured to perform a hard decision process by using amplitude-targeted threshold processing of a reception signal and phase-targeted threshold processing of the reception signal,
wherein at least one threshold processing of the amplitude-targeted threshold processing and the phase-targeted threshold processing is corrected on the basis of a signal generated from the reception signal.
(2) The reception device according to (1), wherein the signal generated from the reception signal is a reception signal of a known signal zone.
(3) The reception device according to (2), wherein the signal generated from the reception signal is a pilot signal.
(4) The reception device according to (1), wherein the signal generated from the reception signal is a remodulated signal, which is a signal generated by remodulating an error correction decode result with a modulation method same as a method used in transmission.
(5) The reception device according to (1), further including
an averaging processing unit configured to average amplitude and phase gap of the reception signal for each ring which is a collection of symbols having a same distance from an origin point, among symbols mapped on an IQ plane in a transmission side, by using the signal generated from the reception signal,
wherein at least one threshold processing of the amplitude-targeted threshold processing and the phase-targeted threshold processing is corrected on the basis of the amplitude and phase gap of the reception signal which are averaged by the averaging processing unit.
(6) The reception device according to (5), wherein
the averaging processing unit averages amplitude and phase gap of a signal which is successful in an error correction process among signals before the error correction corresponding to the remodulated signals, for each of the ring, by using, as a signal generated from the reception signal, a remodulated signal generated by remodulating an error correction decode result with a modulation method same as a method used in transmission.
(7) The reception device according to any of (1) to (6), further including
an equalizing unit configured to perform an equalization process on the reception signal,
wherein the equalizing unit includes the hard decision process unit.
(8) The reception device according to (7), wherein the equalizing unit is composed of a decision feedback equalizer (DFE).

(9) The reception device according to (7), wherein the equalizing unit is composed of a feed-forward equalizer (FFE).

(10) The reception device according to any of (1) to (9), further including

a phase synchronization unit configured to perform a phase correction on the reception signal,

wherein the phase synchronization unit includes the hard decision process unit.

(11) The reception device according to any of (1) to (10), wherein the hard decision is a hard decision for amplitude phase shift keying (APSK).

(12) The reception device according to any of (1) to (11), wherein the hard decision is a hard decision for amplitude shift keying (ASK).

(13) A reception method including:

performing a hard decision process, by a reception device, by using amplitude-targeted threshold processing of a reception signal and phase-targeted threshold processing of the reception signal; and

correcting at least one threshold processing of the amplitude-targeted threshold processing and the phase-targeted threshold processing on the basis of a signal generated from the reception signal.

(14) A program that causes a computer to function as

a hard decision unit configured to perform a hard decision process by using amplitude-targeted threshold processing of a reception signal and phase-targeted threshold processing of the reception signal,

wherein at least one threshold processing of the amplitude-targeted threshold processing and the phase-targeted threshold processing is corrected on the basis of a signal generated from the reception signal.

REFERENCE SIGNS LIST

| | |
|---|---|
| 81 | Correction signal generating unit |
| 82 | Hard decision unit |
| 91 | Amplitude-targeted threshold processing unit |
| 92 | Phase-targeted threshold processing unit |
| 93 | Hard decision result outputting unit |
| 100 | Reception device |
| 101 | Antenna |
| 102 | Tuner |
| 103 | ADC |
| 104 | Equalizing unit |
| 105 | Phase synchronization unit |
| 106 | Amplitude/phase gap averaging unit |
| 107 | Error correction unit |
| 111 | Feed-forward filter |
| 112 | Hard decision unit |
| 113 | Error calculation unit |
| 121 | Phase rotator |
| 123 | Phase difference unit |
| 124 | Loop filter |
| 125 | Oscillator |
| 131 | Amplitude calculation unit |
| 132 | Symbol counter |
| 133 | Known signal generation unit |
| 134 | Phase gap calculation unit |
| 135 | Enable signal generation unit |
| 136 | Amplitude averaging unit |
| 137 | Phase gap averaging unit |
| 141-1 to 141-n | Averaging processing unit |
| 151-1 to 151-n | Averaging processing unit |
| 161 | Phase calculation unit |
| 162 | Amplitude hard decision unit |
| 163 | Phase hard decision unit |
| 164 | Rotation unit |

| 171 | Amplitude calculation unit |
| 172 | Amplitude threshold value calculation unit |
| 173 | Amplitude threshold value comparison unit |
| 174 | Selector |
| 181 | Computation unit |
| 182 | Multiplication unit |
| 191-1 to 191-n | Subtractor |
| 192-1 to 192-n | Phase threshold value comparison unit |
| 193-1 to 193-n | Adder |
| 194 | Selector |
| 200 | Reception device |
| 212 | Feed-back filter |
| 400 | Reception device |
| 402 | Equalization/phase synchronization unit |
| 411 | Converter |
| 412 | Phase rotator |
| 500 | Reception device |
| 511 | Amplitude/phase gap generation unit |
| 512 | Modulation method analyzing unit |
| 531, 532 | RAM |
| 533 | Modulation unit |
| 534 | Amplitude/phase gap averaging unit |
| 551 | Enable signal generation unit |
| 600 | Computer |

**Claims**

1.  A reception device comprising
    a hard decision unit configured to perform a hard decision process by using amplitude-targeted threshold processing of a reception signal and phase-targeted threshold processing of the reception signal,
    wherein at least one threshold processing of the amplitude-targeted threshold processing and the phase-targeted threshold processing is corrected on the basis of a signal generated from the reception signal.

2.  The reception device according to claim 1, wherein the signal generated from the reception signal is a reception signal of a known signal zone.

3.  The reception device according to claim 2, wherein the signal generated from the reception signal is a pilot signal.

4.  The reception device according to claim 1, wherein the signal generated from the reception signal is a remodulated signal, which is a signal generated by remodulating an error correction decode result with a modulation method same as a method used in transmission.

5.  The reception device according to claim 1, further comprising
    an averaging processing unit configured to average amplitude and phase gap of the reception signal for each ring which is a collection of symbols having a same distance from an origin point, among symbols mapped on an IQ plane in a transmission side, by using the signal generated from the reception signal,
    wherein at least one threshold processing of the amplitude-targeted threshold processing and the phase-targeted threshold processing is corrected on the basis of the amplitude and phase gap of the reception signal which are averaged by the averaging processing unit.

6.  The reception device according to claim 5, wherein
    the averaging processing unit averages amplitude and phase gap of a signal which is successful in an error correction process among signals before the error correction corresponding to the remodulated signals, for each of the ring, by using, as a signal generated from the reception signal, a remodulated signal generated by remodulating an error correction decode result with a modulation method same as a method used in transmission.

7.  The reception device according to claim 1, further comprising

an equalizing unit configured to perform an equalization process on the reception signal,
wherein the equalizing unit includes the hard decision process unit.

8. The reception device according to claim 7, wherein the equalizing unit is composed of a decision feedback equalizer (DFE).

9. The reception device according to claim 7, wherein the equalizing unit is composed of a feed-forward equalizer (FFE).

10. The reception device according to claim 1, further comprising
a phase synchronization unit configured to perform a phase correction on the reception signal,
wherein the phase synchronization unit includes the hard decision process unit.

11. The reception device according to claim 1, wherein the hard decision is a hard decision for amplitude phase shift keying (APSK).

12. The reception device according to claim 1, wherein the hard decision is a hard decision for amplitude shift keying (ASK).

13. A reception method comprising:

performing a hard decision process, by a reception device, by using amplitude-targeted threshold processing of a reception signal and phase-targeted threshold processing of the reception signal; and
correcting at least one threshold processing of the amplitude-targeted threshold processing and the phase-targeted threshold processing on the basis of a signal generated from the reception signal.

14. A program that causes a computer to function as
a hard decision unit configured to perform a hard decision process by using amplitude-targeted threshold processing of a reception signal and phase-targeted threshold processing of the reception signal,
wherein at least one threshold processing of the amplitude-targeted threshold processing and the phase-targeted threshold processing is corrected on the basis of a signal generated from the reception signal.

# FIG. 1

# FIG. 2

# FIG. 3

# FIG. 4

RECEPTION SIGNAL →

CORRECTION SIGNAL GENERATING UNIT (81)

HARD DECISION UNIT (82)

CORRECTION SIGNAL

# FIG. 5

A

82 — HARD DECISION UNIT

91

AMPLITUDE-TARGETED
THRESHOLD
PROCESSING UNIT

93

AVERAGE AMPLITUDE GAP

CORRECTION
SIGNAL

PHASE-TARGETED
THRESHOLD
PROCESSING UNIT

92

AVERAGE PHASE GAP

B

82 — HARD DECISION UNIT

91

AMPLITUDE-TARGETED
THRESHOLD
PROCESSING UNIT

93

AVERAGE AMPLITUDE GAP

CORRECTION
SIGNAL

PHASE-TARGETED
THRESHOLD
PROCESSING UNIT

92

C

82 — HARD DECISION UNIT

91

AMPLITUDE-TARGETED
THRESHOLD
PROCESSING UNIT

93

92

CORRECTION
SIGNAL

PHASE-TARGETED
THRESHOLD
PROCESSING UNIT

AVERAGE PHASE GAP

## FIG. 6

EP 3 214 815 A1

FIG. 7

FIG. 8

# FIG. 9

EP 3 214 815 A1

# FIG. 10

EP 3 214 815 A1

# FIG. 11

# FIG. 12

$I \cdot \cos\theta - Q \cdot \sin\theta$

164b-1
~164b
164b-2
I'
164b-3

164c-1
~164c
164c-2
Q'
164c-3

$I \cdot \sin\theta + Q \cdot \cos\theta$

I

Q

164a

$\theta$

TRIGONOMETRIC
FUNCTION
CONVERTER

$\cos\theta$
$\sin\theta$

COMPUTATION UNIT

164

EP 3 214 815 A1

## FIG. 13

AVERAGE AMPLITUDE (1)

AVERAGE AMPLITUDE (2)

AVERAGE AMPLITUDE (3)

AMPLITUDE THRESHOLD VALUE (1):
  CALCULATED FROM AVERAGE AMPLITUDE (1)
  AND AVERAGE AMPLITUDE (2)

AMPLITUDE THRESHOLD VALUE (2):
  CALCULATED FROM AVERAGE AMPLITUDE (2)
  AND AVERAGE AMPLITUDE (3)

EP 3 214 815 A1

## FIG. 14

(a) CURRENT RECEPTION POINT

(b) CORRECT BY REVERSING BY AMOUNT OF AVERAGE PHASE GAP (2)

(c) PERFORM HARD DECISION AT CORRECTED POINT. (PHASE THRESHOLD VALUE MAY BE USED FOR IDEAL SIGNAL POINT)

(d) CORRECTED HARD DECISION PHASE (2)

(e) HARD DECISION PHASE (2) (ROTATE BY AMOUNT OF AVERAGE PHASE GAP (2))

twta out +
twta in ×

# FIG. 15

```
        ┌─────────────────────────┐
        │   START RECEPTION       │
        │      PROCESS            │
        └─────────────────────────┘
                    │
                    ▼
    ┌──────────────────────────────────┐
    │      RECEIVE RADIO WAVE          │  S101
    └──────────────────────────────────┘
                    │
                    ▼
    ┌──────────────────────────────────┐
    │    CONVERT INTO DIGITAL DATA     │  S102
    └──────────────────────────────────┘
                    │
                    ▼
    ┌──────────────────────────────────┐
    │   PERFORM EQUALIZATION PROCESS   │  S103
    └──────────────────────────────────┘
                    │
                    ▼
    ┌──────────────────────────────────┐
    │ PERFORM PHASE SYNCHRONIZATION    │  S104
    │           PROCESS                │
    └──────────────────────────────────┘
                    │
                    ▼
    ┌──────────────────────────────────┐
    │  PERFORM AMPLITUDE/PHASE GAP     │  S105
    │      AVERAGING PROCESS           │
    └──────────────────────────────────┘
                    │
                    ▼
    ┌──────────────────────────────────┐
    │    PERFORM ERROR CORRECTION      │  S106
    └──────────────────────────────────┘
                    │
                    ▼
    ┌──────────────────────────────────┐
    │     OUTPUT DECODE RESULT         │  S107
    └──────────────────────────────────┘
```

# FIG. 16

START EQUALIZATION PROCESS

FILTER WITH FEED-FORWARD FILTER — S121

PERFORM HARD DECISION PROCESS — S122

OBTAIN EQUALIZATION DIFFERENCE BY USING HARD DECISION RESULT — S123

UPDATE FILTER COEFFICIENT — S124

RETURN

# FIG. 17

START PHASE
SYNCHRONIZATION PROCESS

APPLY PHASE ROTATION BY AMOUNT OF $e_k^{-j\theta}$    S141

PERFORM HARD DECISION PROCESS    S142

OBTAIN PHASE DIFFERENCE    S143

OSCILLATE BASED ON
OBTAINED PHASE DIFFERENCE AND
USE OSCILLATED VALUE $e_k^{-j\theta}$
IN NEXT PHASE ROTATION    S144

RETURN

# FIG. 18

```
         ┌─────────────────────┐
         │    START HARD       │
         │  DECISION PROCESS   │
         └─────────────────────┘
                    │
                    ▼
  ┌──────────────────────────────────────┐ S161
  │           CALCULATE PHASE            │
  └──────────────────────────────────────┘
                    │
                    ▼
  ┌──────────────────────────────────────┐ S162
  │         CALCULATE AMPLITUDE          │
  └──────────────────────────────────────┘
                    │
                    ▼
  ┌──────────────────────────────────────┐ S163
  │   CALCULATE AMPLITUDE THRESHOLD VALUE │
  └──────────────────────────────────────┘
                    │
                    ▼
  ┌──────────────────────────────────────┐ S164
  │    COMPARE CALCULATED AMPLITUDE WITH  │
  │      AMPLITUDE THRESHOLD VALUE AND    │
  │ DETERMINE RING POSITION OF RECEPTION SIGNAL │
  └──────────────────────────────────────┘
                    │
                    ▼
  ┌──────────────────────────────────────┐ S165
  │    SET AVERAGE AMPLITUDE OF DETERMINED │
  │  RING POSITION AS HARD DECISION AMPLITUDE │
  └──────────────────────────────────────┘
                    │
                    ▼
  ┌──────────────────────────────────────┐ S166
  │         CORRECT BY AMOUNT OF          │
  │     AVERAGE PHASE GAP FOR EACH RING   │
  └──────────────────────────────────────┘
                    │
                    ▼
  ┌──────────────────────────────────────┐ S167
  │  PERFORM HARD DECISION AT CORRECTED POINT │
  └──────────────────────────────────────┘
                    │
                    ▼
  ┌──────────────────────────────────────┐ S168
  │   REVERSE ROTATION BY AMOUNT OF AVERAGE │
  │  PHASE GAP AND SET AS HARD DECISION PHASE │
  └──────────────────────────────────────┘
                    │
                    ▼
  ┌──────────────────────────────────────┐ S169
  │  SET HARD DECISION PHASE OF RING POSITION │
  │     AS SELECTED HARD DECISION PHASE   │
  └──────────────────────────────────────┘
                    │
                    ▼
  ┌──────────────────────────────────────┐ S170
  │   USE RESULT OF ROTATING HARD DECISION │
  │   AMPLITUDE BY AMOUNT OF SELECTED HARD │
  │  DECISION PHASE AS HARD DECISION RESULT │
  └──────────────────────────────────────┘
                    │
                    ▼
            ┌───────────────┐
            │     RETURN     │
            └───────────────┘
```

# FIG. 19

```
        ┌─────────────────────────────┐
        │  START AMPLITUDE/PHASE GAP  │
        │      AVERAGING PROCESS      │
        └─────────────────────────────┘
                      │
                      ▼
   ┌──────────────────────────────────────────┐
   │ CALCULATE AMPLITUDE OF RECEPTION SIGNAL   │ S181
   └──────────────────────────────────────────┘
                      │
                      ▼
   ┌──────────────────────────────────────────┐
   │           REPRODUCE PILOT SIGNAL          │ S182
   └──────────────────────────────────────────┘
                      │
                      ▼
   ┌──────────────────────────────────────────┐
   │       CALCULATE PHASE GAP BETWEEN         │ S183
   │    RECEPTION SIGNAL AND PILOT SIGNAL      │
   └──────────────────────────────────────────┘
                      │
                      ▼
   ┌──────────────────────────────────────────┐
   │          GENERATE ENABLE SIGNAL           │ S184
   └──────────────────────────────────────────┘
                      │
                      ▼
   ┌──────────────────────────────────────────┐
   │            PERFORM AMPLITUDE              │ S185
   │       AVERAGE PROCESS FOR EACH RING       │
   └──────────────────────────────────────────┘
                      │
                      ▼
   ┌──────────────────────────────────────────┐
   │            PERFORM PHASE GAP              │ S186
   │      AVERAGING PROCESS FOR EACH RING      │
   └──────────────────────────────────────────┘
                      │
                      ▼
                ┌──────────┐
                │  RETURN  │
                └──────────┘
```

# FIG. 20

AMPLITUDE/PHASE GAP AVERAGING UNIT ~106

AVERAGE AMPLITUDE ...... AVERAGE PHASE GAP

| 101 | 102 | 103 |
| --- | --- | --- |
| ANTENNA | TUNER | A D C |

EQUALIZING UNIT 104

PHASE SYNCHRONIZATION UNIT 105

EQUALIZING UNIT 201

ERROR CORRECTION UNIT 107

DECODE RESULT → TO MPEG DECODER

200

EP 3 214 815 A1

## FIG. 21

# FIG. 22

START RECEPTION PROCESS

RECEIVE RADIO WAVE — S201

CONVERT INTO DIGITAL DATA — S202

PERFORM EQUALIZATION PROCESS — S203

PERFORM PHASE SYNCHRONIZATION PROCESS — S204

PERFORM EQUALIZATION PROCESS — S205

PERFORM AMPLITUDE/PHASE GAP AVERAGING PROCESS — S206

PERFORM ERROR CORRECTION — S207

OUTPUT DECODE RESULT — S208

# FIG. 23

START EQUALIZATION
PROCESS

FILTER WITH FEED-FORWARD FILTER    S221

ADD FEED-FORWARD FILTER OUTPUT
AND FEED-BACK FILTER OUTPUT    S222

PERFORM HARD DECISION PROCESS    S223

PERFORM FEED-BACK FILTERING BY
USING HARD DECISION RESULT    S224

OBTAIN EQUALIZATION DIFFERENCE BY
USING HARD DECISION RESULT    S225

UPDATE FILTER COEFFICIENT    S226

RETURN

# FIG. 24

# FIG. 25

START RECEPTION
PROCESS

RECEIVE RADIO WAVE | S401

CONVERT INTO DIGITAL DATA | S402

PERFORM EQUALIZATION/
PHASE SYNCHRONIZATION PROCESS | S403

PERFORM AMPLITUDE/PHASE GAP
AVERAGING PROCESS | S404

PERFORM ERROR CORRECTION | S405

OUTPUT DECODE RESULT | S406

## FIG. 26

FIG. 27

511

AMPLITUDE/PHASE GAP GENERATION UNIT

531

RAM

534

AMPLITUDE/PHASE GAP AVERAGING UNIT

532

RAM

541

INTERLEAVE UNIT

542

MAPPING UNIT

MODULATION UNIT

533

EP 3 214 815 A1

# FIG. 28

SIGNAL BEFORE ERROR CORRECTION

REMODULATED SIGNAL

534 — AMPLITUDE/PHASE GAP AVERAGING UNIT

131 — AMPLITUDE CALCULATION UNIT

134 — PHASE GAP CALCULATION UNIT

ENABLE SIGNAL GENERATION UNIT — 551

136 — AMPLITUDE AVERAGING UNIT

141-1 AVERAGING PROCESSING UNIT → AVERAGE AMPLITUDE (1)

141-2 AVERAGING PROCESSING UNIT → AVERAGE AMPLITUDE (2)

141-n AVERAGING PROCESSING UNIT → AVERAGE AMPLITUDE (n)

137 — PHASE GAP AVERAGING UNIT

151-1 AVERAGING PROCESSING UNIT → AVERAGE PHASE GAP (1)

151-2 AVERAGING PROCESSING UNIT → AVERAGE PHASE GAP (2)

151-n AVERAGING PROCESSING UNIT → AVERAGE PHASE GAP (n)

EP 3 214 815 A1

## FIG. 29

START RECEPTION PROCESS

RECEIVE RADIO WAVE — S501

CONVERT INTO DIGITAL DATA — S502

PERFORM EQUALIZATION PROCESS — S503

PERFORM PHASE SYNCHRONIZATION PROCESS — S504

PERFORM ERROR CORRECTION — S505

OUTPUT DECODE RESULT — S506

PERFORM AMPLITUDE/PHASE GAP GENERATION PROCESS — S507

# FIG. 30

START AMPLITUDE/PHASE GAP
GENERATION PROCESS

STORE I SIGNAL AND Q SIGNAL BEFORE
LDPC CODE DECODING PROCESS  S511

STORE DATA AFTER LDPC CODE DECODING PROCESS  S512

MODULATE STORED DATA  S513

PERFORM AMPLITUDE/PHASE GAP AVERAGING PROCESS
CORRESPONDING TO MODULATION SIGNAL FOR
EACH MODULATION METHOD AND MODULATION SIGNAL  S514

SUPPLY AVERAGE AMPLITUDE AND AVERAGE PHASE GAP
OF CURRENT MODULATION METHOD  S515

RETURN

# FIG. 31

```
        ┌─────────────────────────────┐
        │  START AMPLITUDE/PHASE GAP  │
        │      AVERAGING PROCESS      │
        └─────────────────────────────┘
                      │
                      ▼
    ┌────────────────────────────────────┐ S531
    │   CALCULATE AMPLITUDE OF SIGNAL     │
    │     BEFORE ERROR CORRECTION         │
    └────────────────────────────────────┘
                      │
                      ▼
    ┌────────────────────────────────────┐ S532
    │ CALCULATE PHASE GAP BETWEEN SIGNAL  │
    │  BEFORE ERROR CORRECTION AND        │
    │       REMODULATED SIGNAL            │
    └────────────────────────────────────┘
                      │
                      ▼
    ┌────────────────────────────────────┐ S533
    │       GENERATE ENABLE SIGNAL        │
    └────────────────────────────────────┘
                      │
                      ▼
    ┌────────────────────────────────────┐ S534
    │         PERFORM AMPLITUDE           │
    │   AVERAGING PROCESS FOR EACH RING   │
    └────────────────────────────────────┘
                      │
                      ▼
    ┌────────────────────────────────────┐ S535
    │            PHASE GAP                │
    │   AVERAGING PROCESS FOR EACH RING   │
    └────────────────────────────────────┘
                      │
                      ▼
              ┌───────────────┐
              │    RETURN     │
              └───────────────┘
```

*FIG. 32*

**INTERNATIONAL SEARCH REPORT**

| International application No. |
| --- |
| PCT/JP2015/079329 |

A.  CLASSIFICATION OF SUBJECT MATTER
*H04L27/38*(2006.01)i, *H04L27/01*(2006.01)i, *H04L27/06*(2006.01)i

According to International Patent Classification (IPC) or to both national classification and IPC

B.  FIELDS SEARCHED

Minimum documentation searched (classification system followed by classification symbols)
H04L27/38, H04L27/01, H04L27/06

Documentation searched other than minimum documentation to the extent that such documents are included in the fields searched
Jitsuyo Shinan Koho          1922-1996  Jitsuyo Shinan Toroku Koho  1996-2015
Kokai Jitsuyo Shinan Koho    1971-2015  Toroku Jitsuyo Shinan Koho  1994-2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y<br>Y | WO 2008/102877 A1  (Nippon Hoso Kyokai),<br>28 August 2008 (28.08.2008),<br>paragraphs [0058] to [0064]; fig. 11 to 13<br>& JP 5053357 B          & US 2010/0166008 A1<br>paragraphs [0077] to [0083]; fig. 11 to 13<br>& US 2011/0255559 A1     & EP 2129070 A1<br>& CN 101663873 A | 1-3,10-14<br>4<br>1-14 |
| X<br>Y<br>Y | Kodo Kotaiiki Eisei Digital Hoso no Denso<br>Hoshiki, Hyojun Kikaku ARIB STANDARD ARIB<br>STD-B44, 1.0 edition, 29 July 2009 (29.07.2009),<br>pages 41, 43, 56 to 60 | 1-3,10-14<br>4<br>1-14 |

☒  Further documents are listed in the continuation of Box C.     ☐  See patent family annex.

\*    Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>    11 November 2015 (11.11.15) | Date of mailing of the international search report<br>    24 November 2015 (24.11.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

EP 3 214 815 A1

## INTERNATIONAL SEARCH REPORT

| International application No. |
| --- |
| PCT/JP2015/079329 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2012-65008 A  (Sony Corp.),<br>29 March 2012 (29.03.2012),<br>paragraphs [0007] to [0014], [0019], [0053] to [0067], [0081] to [0137]; fig. 6, 8, 10, 11<br>& US 2012/0063549 A1<br>paragraphs [0007] to [0014], [0018], [0073] to [0087], [0101] to [0157]; fig. 6, 8, 10, 13<br>& EP 2429139 A2        & CN 102404277 A<br>& RU 2011136936 A | 1-14 |
| Y | JP 2004-72251 A  (Matsushita Electric Industrial Co., Ltd.),<br>04 March 2004 (04.03.2004),<br>paragraphs [0003] to [0017], [0021], [0054] to [0058]; fig. 11<br>(Family: none) | 4,6 |
| Y | JP 2001-69117 A  (Matsushita Electric Industrial Co., Ltd.),<br>16 March 2001 (16.03.2001),<br>paragraphs [0036] to [0045]; fig. 5<br>& US 6801586 B1<br>column 4, line 63 to column 6, line 26; fig. 7<br>& EP 1081906 A2        & KR 10-2001-0050272 A<br>& CN 1286541 A | 4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012039259 A

- JP 2012065008 A